# EUROPEAN PATENT SPECIFICATION

(11) **EP 4 139 862 B1**
(45) Date of publication and mention of the grant of the patent: **29.10.2025**
(21) Application number: 21714149.8
(22) Date of filing: 24.03.2021
(51) Int. Cl.: G06Q 10/0631, G06Q 10/0639, G06Q 30/018, G06Q 10/20, G06Q 50/20, G06Q 10/10

(54) **DIGITAL CLOUD-BASED PLATFORM AND METHOD FOR PROVIDING SHELL COMMUNICATION WITH COGNITIVE CROSS-COLLABORATION ACCESS USING CERTIFIED ATTRIBUTE PARAMETERS AND OPERANT CONDITIONING TAGS**
DIGITALE NETZWERKPLATTFORM UND VERFAHREN ZUR BEREITSTELLUNG EINES KOLLABORATIONSÜBERGREIFENDEN ZUGRIFFS BASIEREND AUF ZERTIFIZIERTEN ATTRIBUTPARAMETERN UND OPERANTEN KONDITIONIERUNGSETIKETTEN
PLATEFORME DE RÉSEAUTAGE NUMÉRIQUE ET PROCÉDÉ POUR FOURNIR UN ACCÈS À LA COLLABORATION CROISÉE SUR LA BASE DE PARAMÈTRES D'ATTRIBUTS CERTIFIÉS ET D'ÉTIQUETTES DE CONDITIONNEMENT OPÉRANT

(30) Priority: 20.04.2020 EP 20170367
(43) Date of publication of application: 01.03.2023
(73) Proprietor: Benlink AG, 9240 Uzwil (CH)
(72) Inventor: KERNLAND, Martin E., 8180 Bülach (CH); SEMADENI, Riccardo Franco, 8800 Thalwil (CH); WARD, Ross Omar, Maidstone, ME17 2PA (GB); WENDLER, Simone Elisabeth, 8004 Zürich (CH)
(74) Representative: Leimgruber, Fabian Alfred Rupert
(86) International application number: PCT/EP2021/057612
(87) International publication number: WO 2021/213770

(56) References cited:
- US-A1- 2019 026 702
- US-B1- 6 859 523
- US-B1- 7 155 400

## Description

### Field of the Invention

The present invention relates to a digital cloud-based networking system and platform providing controlled data- and project-driven cross-network data access, multi-user interaction and certified cross-network project collaboration, between a plurality of users with network-enabled devices on a secured cloud-based network. In particular, the invention relates to digital platforms facilitating certified networking collaboration in a secured, cloud-based network communication with the digital platform with different classes/groups of user having an assigned relationship to tasks to be performed in the process-driven networking interaction and project collaboration. The set-up of the peer-reviewed relationships provides the basis for the networking collaboration and process-driven project collaboration development. The inventive digital platform makes it possible to overcome the known process frictions of such platforms for example induced by lack of standardization, driving networking complexity and missing tagging. Furthermore, web-based productivity features can provide enhancements to the users' environment so that users assignable to a project can collaborate and perform accounting over the digital platform using the platform according to the established relationships. In particular, the present invention deals with automation and secure access to resources, workflows, human or project management, e. g. managing and/or peer-reviewed allocation of time, respectively human resources.

### Background of the Invention

The technical research and development world is changing faster than ever. To compete, it is often necessary to maintain, adapt and exchange technology, maintenance services and data on a level where only highly specialist technical experts can operate, and within a very short reaction timeframe to uphold operation times, in particular in the field of complex industry facilities or plants. Such specialists are often distributed over almost the whole globe, and difficult to find. In order to achieve the needed scale and secure collaboration interaction, there is a huge demand for new, better suited technology for establishing and developing digital platforms that extend the organizational boundaries and technical limitations of participants. In fact, in recent years, digital platform technology has emerged as one of the most powerful technical manifestations of the digital revolution, which is also referred to as the "fourth industrial revolution," or in short, industry 4.0. Thanks to rapid advances in cloud, mobile and analytics, and the falling cost of these new technologies, digital platforms are able to create the next step of growth and breakthrough technology for innovation. Digital platforms make it possible to bring together vast development, research and collaboration communities of expert technicians, repairpersons, developers and engineers. Digital platform technology allows them to create networking collaborations and developments, in particular project- and task-specific collaborations and developments of enormous scale and efficiency. Furthermore, this technology enables new levels of networking collaboration between companies and specialists from different technological fields and industrial sectors. As such, cloud computing platforms can offer building, deployment and management for different types of applications and/or processes.

The increasing significance of digital platforms and associated ecosystems is based on and driven by the emergence of new digital infrastructures (e.g., Internet of Things, cloud computing, blockchain, big data analytics) and the infusion of digital technologies into products, services and processes. The availability of ubiquitous digital infrastructures that underlie digital platforms has radically restructured the nature, ways, processes, structure as well as the cost of providing services and doing businesses. Thus, there is a huge demand for appropriate technology for digital platforms allowing a controlled and structured networking interaction between the participants in the virtual ecosystem.

Automated service provider platform systems are known for example from US 2015/0286979 A1 or US 7,502,747 B1; these publications reveal an automated scheduling of service tasks, respectively an automated scheduling of appointments for service tasks. The described prior art systems are configured to manage the scheduling and assignment of jobs to service providers based on one or more factors, for example an initial estimated length of time to perform the type of service task, the technician availability schedules, the technician skills or the technician skill level in regard to a requested service task by a purchaser of the service task. However, the purchaser of a service task has to rely on the presented data of the conventional service provider platform systems, including all ratings and/or skill levels of a service provider, where these ratings and/or skill levels are given based on the service provider's inputs. These data concern *inter alia* service provider data related to the self-allocation of service tasks, the presented service provider skill levels in regard to assigned service tasks, the number of successfully completed service tasks, the time requirements for performing the service tasks, respectively travel time and travel expenses, the costs for the service task, the language skills in reading/writing and speaking of the service provider. It should be noted that this list of data makes no claim to completeness, and furthermore it is also possible that one or more data cited above may be of low level of interest. But what all the above data have in common is that they are given to the purchaser without any proof or certification; consequently, the data in question are quasi "set in stone" and will not be situationally adapted based on currently generated data.

US 6,859,523 B1 discloses a system for automatically manage one or more human workers carrying out a process of manipulating source data provided to produce result data. The process including a set of task steps each having an input and resulting in a task result. The system includes receiving units of source data from a customer. For each unit of source data and each task step for the unit of source data, the system dispatches the task step and the corresponding input unit to a worker and, after the worker carries out the dispatched task step on the input unit, the task result is received of the dispatched task step and input unit from the worker. Each worker is certified to have task skills, each task step requires a corresponding task skill, and the dispatching of any task step occurs automatically substantially without human management to a worker who is certified to have the corresponding task skill of the task step. The method further includes assessing the task results of the task steps for the units of source data. Further, US 2019/0026702 A1 discloses a system for providing job-specific training material and job-specific employment tasks to an inmate within a controlled environment. The system authenticates a registered user by receiving an authentication request at a control platform from a wireless device in response to a user-initiated action and provides the user access to interactive training materials stored on a training database, interactive testing materials stored on a testing database, or an employment subsystem which provides an interface for the user to perform job-specific tasks upon authenticating the user. Access to each of the databases or subsystem is provided to the user based on a profile corresponding to the user. The tasks are completed using the wireless device. Finally, US 7,155,400 B1 discloses a system for managing human workers carrying out a process of manipulating source data provided to produce result data. The process includes a set of task steps each having an input and resulting in a task result. The system receives units of source data from a customer. For each unit of source data and each task step for the unit of source data, the system dispatches the task step and its corresponding input unit to a worker and, after the worker carries out the dispatched task step on the input unit, the system receives the task result corresponding to the dispatched task step and input unit from the worker. Each worker is certified to task skills, wherein each task step requires a corresponding task skill. The dispatching of a task step occurs automatically substantially without human management to a worker who is certified to have the corresponding task skill of the task step. The system further is able to automatically recruit workers substantially with no human management when a shortfall is predicted.

### Summary of the Invention

The present invention relates to a digital platform for providing controlled project-driven networking interaction between operating units and deployment units according to the sole independent claim 1.

The present invention has been made in view of the above technical problems of the prior art systems. It is one object of the present invention to provide a digital networking platform and digital service provider platform, respectively, for intelligent task management and technical service need management allowing project-driven cross-network data access, multi-user interaction and certified project collaboration, between a plurality of users with network-enabled devices on a secured cloud-based network. In particular, the invention has the object of providing an intelligent digital platform facilitating certified networking collaboration in a multi-user environment by a secured, cloud-based network communication. The invention should make it possible to provide collaboration for different heterogenous classes/groups of users or units having an assigned relationship, in particular hierarchical relationships, to tasks or jobs to be performed or executed within a project in the process-driven networking interaction and project collaboration.

According to the present invention, these objects are achieved, particularly, with the features of the independent claims. In addition, further advantageous embodiments can be derived from the dependent claims and the related descriptions.

According to the present invention, the above-mentioned objects for a digital networking platform providing controlled project-driven networking interaction and/or shell communication are achieved, particularly, in that, by means of the present invention, the controlled project-driven networking interaction is provided by the digital platform between operating units and deployment units, the units assessing the digital networking platform by network-enabled devices via the data transmission network, and each unit having a unit account assigned in a communication database of the digital networking platform with associated authentication and authorization credentials for a controlled network access to secure, cloud-based networks provided by the digital cross-network platform, wherein projects, held in a persistence storage of the digital networking platform, comprise at least one assigned relationship between an operating unit, one or more deployment units, and a project task, the digital networking platform comprising: a network interface of the digital platform providing network access to the secure, cloud-based networks for the operating units and deployment units via the data transmission network by means of the network-enabled devices, wherein a project, held in the persistence storage of the digital networking platform, is assessible only for assigned units via a dedicated, secure network providing upload and download access of project data related to a project and sharing of project data with other units according to the assigned relationship; a project manager module extracting project data from a project submission of an operating unit requesting a new project, wherein a new project is generated based on the project submission data and wherein related project data are stored to the persistence storage; a task selector selecting one or more tasks, e.g. plansifter maintenance, to be executed by a deployment unit from a task database based on the project submission data, and selecting one or more deployment units based on certified skill accreditation data of the deployment units denoting certified skills executable by a specific deployment unit, wherein the selected task is assigned to the selected at least one deployment unit providing a relationship associated with the new project; and an access controller generating a secure, cloud-based network for the new project providing access to the new project for the operating unit and selected deployment unit denoted in the relationship, wherein the relationship is established between a pair of units prior to any communication between the pair of units is permitted. The task selector can for example comprise a machine-based matching structure, wherein appropriate skill certifications are determined to perform a specific task associated with a project by means of the machine-based matching structure, and wherein at least one deployment unit is determined based on the determined skill certifications needed and additional trigger criteria comprising at least location of the operating unit of the submission data and location of available deployment unit. For selection of the deployment unit, mandatory and optional skills can be determined by the machine-based matching structure to perform a selected task, wherein mandatory skills are required to complete the selected task, and wherein the optional skills at least comprise speaking language parameter and/or additional skill parameter denoting additional services or equipment. The deployment units can be filtered for the mandatory skills by the machine-based matching structure, i.e. deterministic, while a scoring structure is applied for the optional skills by the machine-based matching structure, wherein the higher score is triggered for a deployment unit the more likely the deployment unit is selected by the machine-based matching structure. The scoring can for example be based on best skill matching. Alternatively or additionally, the scoring can be based on highest margin matching taking into account pricing parameter values of a deployment unit and/or expense parameter values and/or travel time or geographic distance parameter values. The scoring can further be based on a best-for-platform-growth structure providing higher scores to deployment units which have rarely or never conducted a task using the platform. The machine-based matching structure can for example comprise one or more machine-based learning structures (ML). The machine-based learning structure (ML) can for example comprise hill climbing, genetic or evolutionary machine-based learning structures. The digital networking platform can for example comprise a dispatcher for automated notification of the selection of one or more deployment units and/or one or more service provider platforms associated with appropriate deployment units. The dispatcher can for example comprise an auction process providing access to a specific task to suitable deployment units.

The invention has, *inter alia,* the advantage that the digital platform provides a software platform to deploying units, such as service companies or independent tech-savvy people, where they can become trained and qualified for specific standardized (by the digital platform environment) service tasks/jobs. These tasks/jobs are then offered to qualified (and certified) deployment units, such as technicians, or to their service company. Depending on their availability, the deployment units can accept the job and then execute the task/job. The task/job execution is done under the digital platform regime, e.g. wearing clothing provided or accepted by the digital platform standards. The digital platform can for example bill the operating unit, as end-customer for the service, and pays the deployment unit, such as service technicians or company, according to previously agreed on rates. The liability for the task/job execution can for example lie with the digital platform.

As an embodiment variant, the current service provider platform comprises a service task database and a service provider interface connected to an input database, which is designed to collect and store, over the service provider interface, requested and/or received input data from at least one service provider, in which these input data are analyzed in an assessment unit to assign at least one skill level to the service provider, wherein the service provider platform further comprises a training unit in which at least one automatically, i.e. reasoned, generated or calculated with little or no human interaction, for example by following a pre-defined algorithm or configuration, or by responding to the input of one or more other software components by direct input or via feedback loops, and individually compiled training session based on the at least one skill level is automatically or on request made available to the service provider, in which this training session has to be successfully attended by an interaction of the service provider, wherein at least another skill level is assigned to the service provider, wherein the service provider platform further comprises a matching unit designed to run at least one intelligent algorithm, wherein based on the at least one and/or another skill level used in the at least one intelligent algorithm automatically or on request, an at least one feasible service task is allocated to the service provider in the matching unit, and wherein the service provider platform further comprises a service provider profile database in which the service provider with a number of related service provider data are automatically or on request registered in that service provider profile database. The highlight of the current service provider platform is seen in the self-checking and the automatically improving. Each service provider who intends to become part of the service provider platform is requested to transfer their own input data into the input database, in which these input data are challenged by the assessment unit. Subsequently, the service provider must attend a training session to reach another skill level "at the end of the day," and based on that, an at least one allocated service task. The new service provider platform is quasi-equipped with a self-checking unit function, respectively a self-monitoring unit function for automatically improving itself and while tidying up or cleaning up the whole service provider platform permanently.

The training session the service provider must attend can be held online with bidirectional training communication and the training session can comprise teaching material in the form of video files as well as audio files and the related equipment can comprise a display, speaker, microphone (headset) and mouse pointer. It may also involve a lecture by using a remote transmission, wherein the lecturer is an external (third party) service provider hired for presentation of the automated and individually compiled training session. Of course, an inhouse lecturer is also conceivable, who can hold live lectures by broadcasting and/or provide recordings of lectures for time-shifted studies for multiple students in different time zones as well. The service providers belonging to the service provider platform system can be from different technical areas, e.g. occupy different positions; for one technical area the service provider can act as lecturer, in another technical area the service provider has the status of a student, and in yet another technical area the same service provider is neither one thing nor the other and acts just as service provider performing service tasks according to purchaser's orders.

The purchaser orders a service task via a service task ordering interface and after completion of this service task, sends feedback data to the service provider platform system, on which feedback data the involved service provider is re-evaluated; of particular importance is that the rating unit has a feedback connection to the assessment unit for an automated re-evaluation of the service provider for automatically increasing service provider data and/or for asking the service provider to attend an at least second automatically and individually compiled training session based on the automated re-evaluation of the service provider, where this at least second automatically and individually compiled training session must be successfully attended by interaction of the service provider, wherein yet another skill level is assigned to the service provider, where this yet another skill level automatically increases the related service provider data in the service provider profile database.

In another embodiment variant, the digital platform and the at least one service provider platforms are structured as distributed network using edge computing where the service provider platforms are realized as edge servers decentrally deployed to the providers. One advantage is that the embodiment variant is able to deliver low latency nearer to a request or shell communication together with real-time processing of the data. The digital platform operates on big data while the edge computing structure operates on "instant data" that is real-time data generated by sensors associated with the operating units and/or deployment units assessed to the digital networking platform. E.g. the sensors or measuring devices can capture geographical location parameters as longitude or latitude measuring parameters or operating time parameters of one or more operating unit etc. Based on the additional measuring parameters, the digital platform can provide additional selectivity on provided or possibly selectable shell communications, i.e. the secure, cloud-based networks, between the operating units and/or deployment units in respect to a specific project.

Further, the digital platform can e.g. provide shell icon communications via a remote synchronization client at the operating units and/or deployment units, the shell icon communications concerning status or other parameters of projects hosted on the cloud-based digital platform. A corresponding host server application at the cloud-based collaboration digital platform can incrementally update the remote synchronization clients at the operating units and/or deployment units (or devices running associated with the operating units and/or deployment units) with projects that provided via the digital platform. The digital platform comprising the cloud-based collaboration and cloud storage server can incrementally update remote synchronization the clients and/or access tools at the operating units and/or deployment units with events that occurred via the digital platform. The operating units and/or deployment units can comprise any digital, network-enabled system and/or device. and/or any combination thereof to establish a communication or a connection to the digital platform, including wired. wireless, cellular connections with another device, a server and/or other systems such as host server and/or a notification server applications on the digital platform and/or measuring devices and sensors associated with the operating units and/or deployment units. Signals received or detected can e.g. indicate operating units and/or deployment unit activities as project collaborators accessing a project through the digital platform providing a web-based collaboration environment or online collaboration platform. Further, the digital platform and/or the operating units and/or the deployment units and its database systems may be vulnerable to intrusion by an unauthorized user or system e.g. through a reverse secure shell connection that enables the intruder to execute low level commands on the digital platform and/or the operating units and/or the deployment units. A reverse shell connection can be detected by monitoring and inspecting packet data traffic between the network of the digital platform and an exterior network. Such a process, for example, after detecting a normal shell session originating inside the digital platform's network, a reverse shell connection exploiting the initial shell detection can be detected by analyzing the transmission directions and payload sizes of a sequence of the monitored packets relative to a predetermined traffic pattern. The specific pattern may be selected for the different systems involved, e.g. the digital platform and/or the operating units and/or the deployment units.

### Brief Description of the Drawings

The present invention will be explained in more detail below, relying on examples and with reference to these drawings, in which:

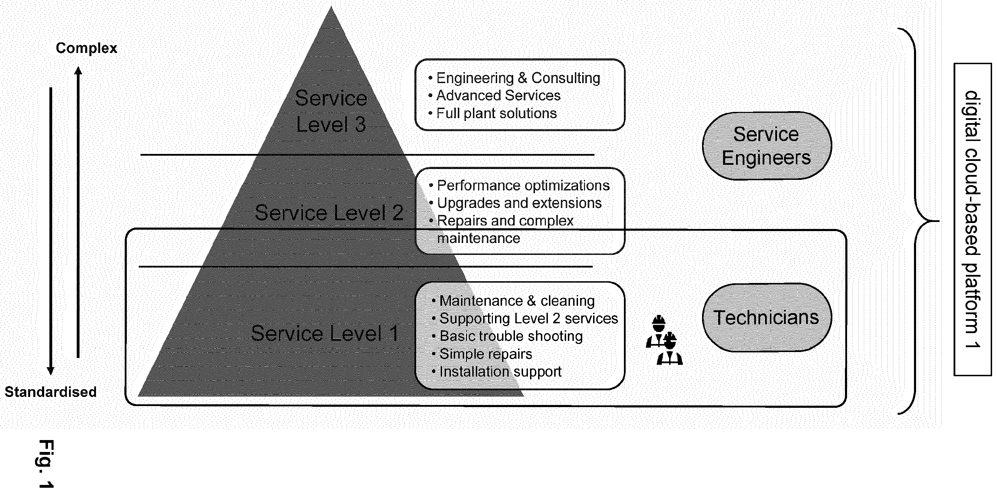

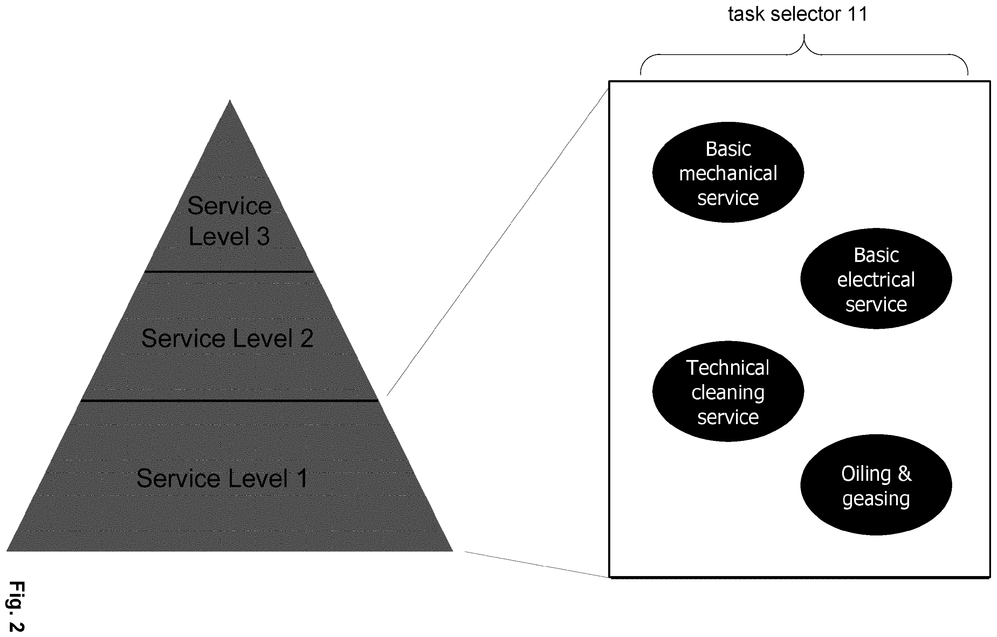

Figures 1 and 2 each show a diagram, schematically illustrating the dynamic task allocation and/or placement by means of the digital networking platform 1 to submitted project 101, 102, ..., 10i, with a focus an level 1 tasks 1111, 1112,...,111i, wherein the tasks 1111, 1112,...,111i are grouped in two or more (here three) levels of tasks 1111, 1112,...,111i.

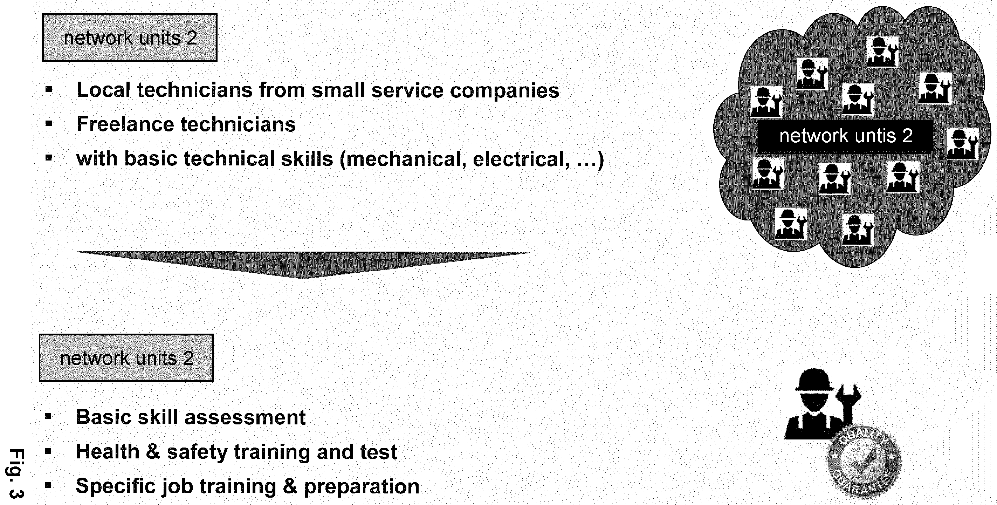

Figure 3 shows a diagram, schematically illustrating the certification process for the deployment units 31,32,...,3i.

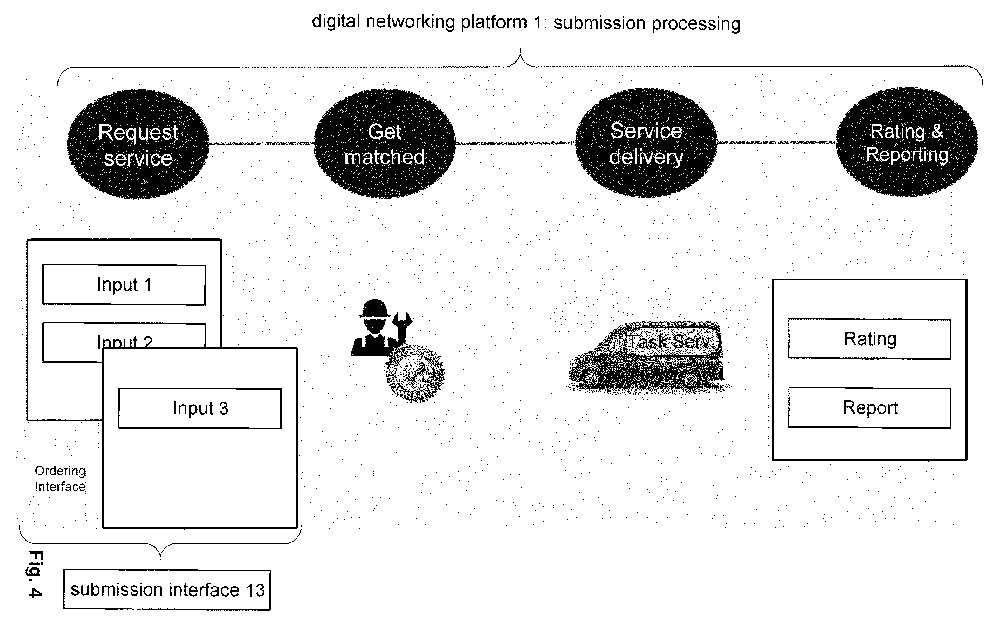

Figure 4 shows a diagram, schematically illustrating the dynamic task allocation process by means of the digital networking platform 1 to submitted project 101, 102, ..., 10i requests involving tasks 1111, 1112,...,111i.

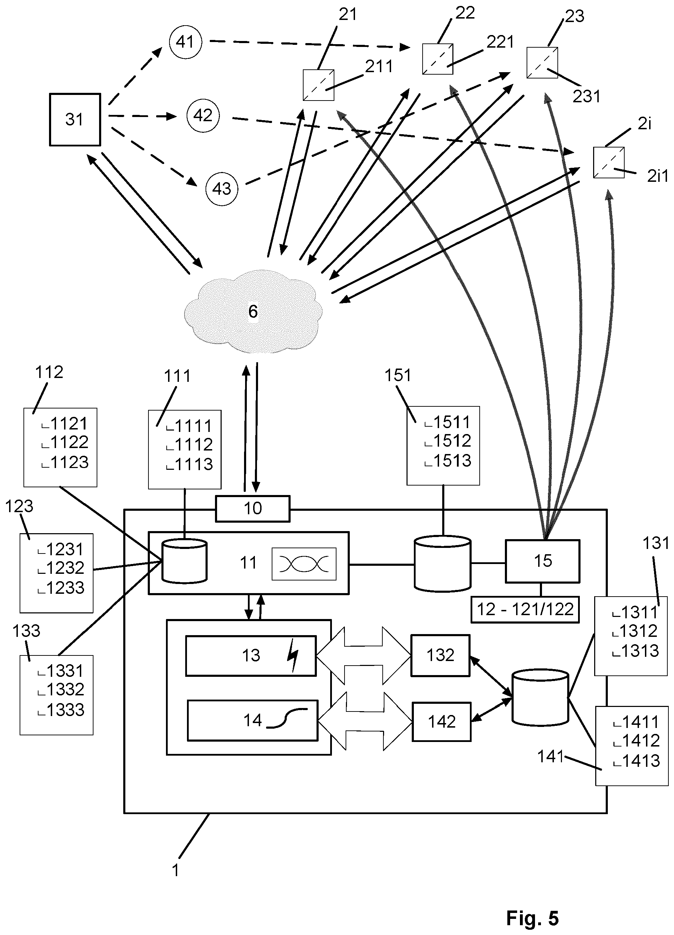

Figure 5 shows a block diagram, schematically illustrating the digital networking platform 1 for providing controlled process-driven networking interaction and project 101, 102, ..., 10i development between units 2/3 having network-enabled devices accessing, over the network 4, each project 101, 102, ..., 10i having an assigned relationship 1011,1021,...,102i with one or more units 2/3 comprised in a persistence storage 10 of the digital networking platform 1, each assigned relationship providing a defined relationship 1011,1021,...,102i between at least two units 2/3 and a project 101, 102, ..., 10i.

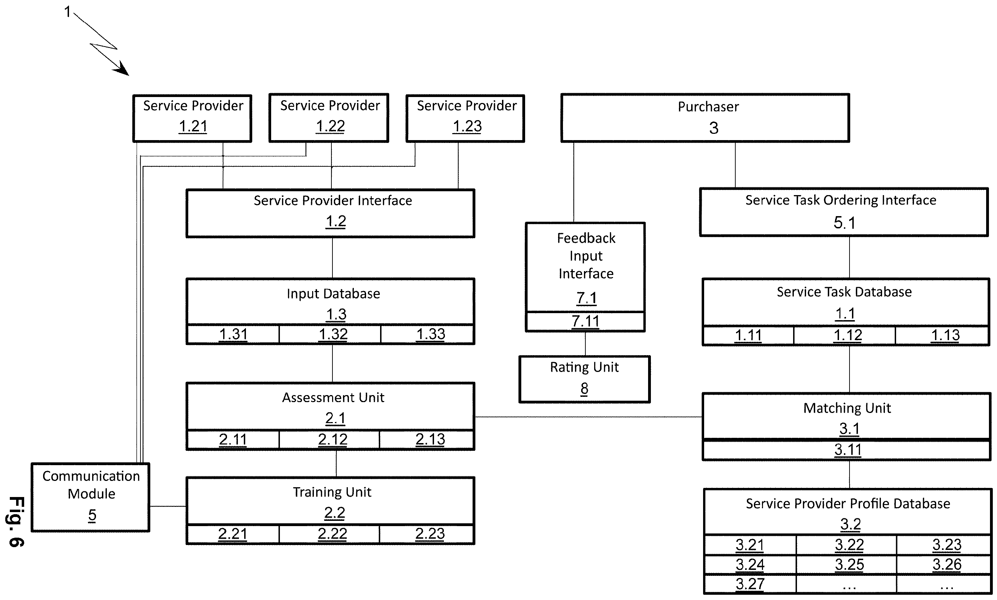

Figure 6 shows a block diagram, schematically illustrating the digital networking platform 1 realized as a digital service provider platform 1 comprising a service task database 1.1 and a service provider interface 1.2 connected to an input database 1.3, which is designed to collect and store, over the service provider interface 1.2, requested and/or received input data 1.31, 1.32. 1.33 from at least one service provider 1.21, 1.22, 1.23, where these input data 1.31, 1.32. 1.33 are analyzed in an assessment unit 2.1 to assign at least one skill level 2.11, 2.12, 2.13 to the service provider 1.21, 1.22, 1.23.

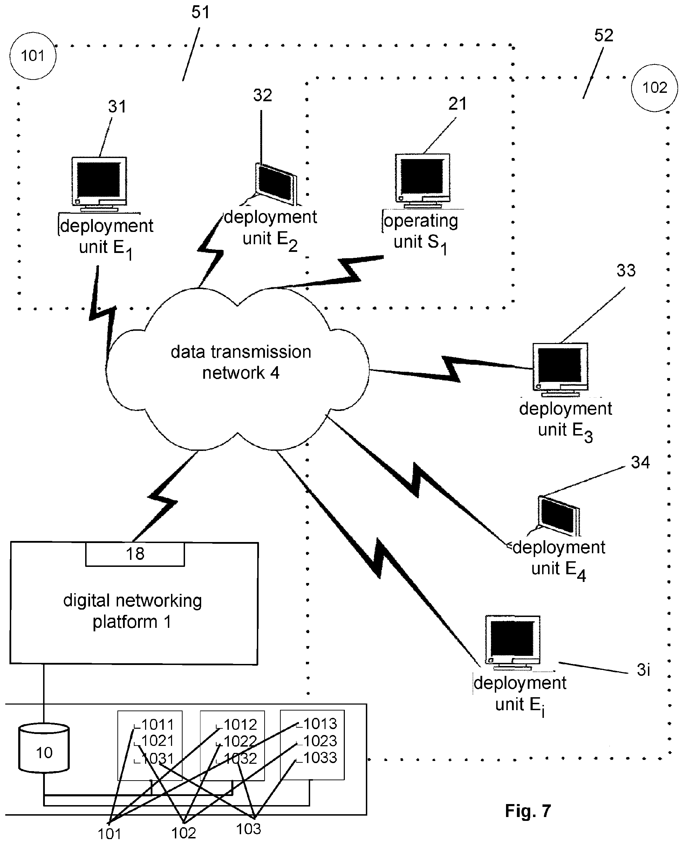

Figure 7 shows a diagram, schematically illustrating the digital networking platform 1 for providing controlled process-driven networking interaction and project 101, 102, ..., 10i development between the operating unit 21 and the deployment units 31,32,...,3i having network-enabled devices 2i2/3i2 on the secured cloud-based network 51 and 5. Each unit 2i/3i has a unit account 162/163 in the digital networking platform 1 with assigned authentication and authorization credentials for authentication and authorization controlled network access 141 to the digital cross-network platform 1 and the secured cloud-based network 5. Each project 101, 102, ..., 10i has an assigned relationship 1121,1122,...,112i with one or more units 2/3 comprised in a persistence storage 10 of the digital networking platform 1, wherein each assigned relationship 1121,1122,...,112i provides a defined relation between an operating unit 21, one or more deployment units 31,32,...,3i and the project 101, 102, ..., 10i.

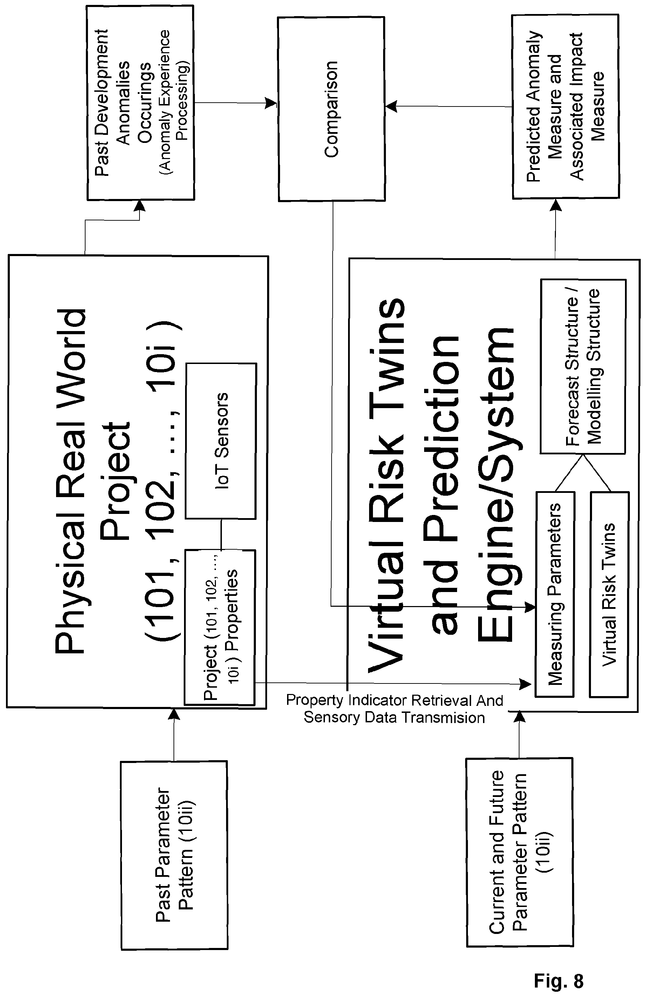

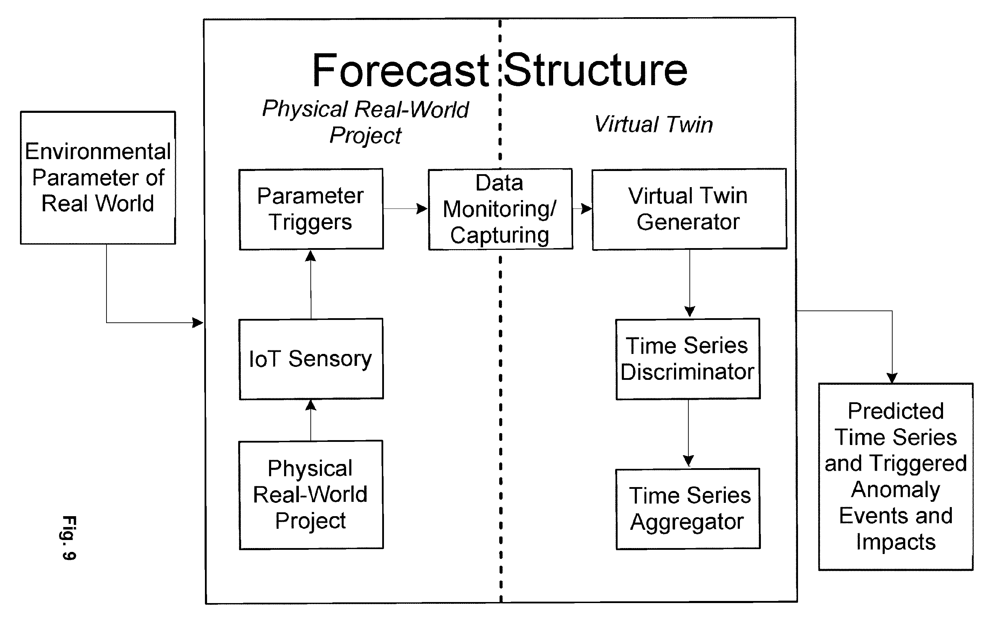

Figures 8 and 9 show diagrams, schematically illustrating the digital networking platform 1 generating and storing a digital replica of the project 101, 102, ..., 10i, wherein by means of the at least one sensor associated with a twinned physical replica of the project 101, 102, ..., 10i, structural, operational and/or environmental status parameters 10ii of the real-world project 101, 102, ..., 10i are measured, monitored, and transmitted to the digital platform 1, wherein the digital replica is dynamically updated based on the transmitted parameter values, and wherein predictive times series of parameter values for a future development of the project 101, 102, ..., 10i are generated.

The following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be, but not necessarily are, references to the same embodiment; and such references mean at least one of the embodiments. Reference in this specification to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but no other embodiments. The terms used in this specification generally have their ordinary meanings in the art, within the context of the disclosure, and in the specific context where each term is used. Certain terms that are used to describe the disclosure are discussed below, or elsewhere in the specification, to provide additional guidance to the person skilled in the art regarding the description of the disclosure. For convenience, certain terms may be highlighted, for example using italics and/or quotation marks. The use of highlighting has no influence on the scope and meaning of a term; the scope and meaning of a term is the same, in the same context, whether or not it is highlighted. It will be appreciated that same thing can be said in more than one way. Consequently, alternative language and synonyms may be used for any one or more of the terms discussed herein, nor is any special significance to be placed upon whether or not a term is elaborated or discussed herein. Synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any exemplified term. Likewise, the disclosure is not limited to various embodiments given in this specification.

### Description of the preferred embodiment

Figures 1-7 schematically illustrate an architecture for a possible implementation of an embodiment of the digital networking platform 1 for providing controlled project-driven networking interaction between operating units 2 and deployment units 3. Structurally, the present invention extends prior art secure collaboration networks within a new technical scheme to include different level units 31,32,...,3i with different skills for dedicated tasks 1111,1112, ..., 111i from different networks, different organizations, on different machines and from varying geographic locations and other boundary condition backgrounds. Thus, the present invention allows units/users 2/3 to securely exchange and assign confidential information, generate and submit project development processes with assigned tasks to be performed by deployment units 3, and so on, across corporate and geographic boundaries through a secure connection based on peer-reviewed tasks and corresponding certified deployment units. The operating units 2 and deployment units 3 assess the digital networking platform 1 by network-enabled devices 2i2/3i2 via the data transmission network 4.

As a possible embodiment of the physical hardware of the digital platform 1, the digital platform 1 comprises a web server 17, which can be connected to the data transmission network 4 via a secure data transmission network interface 18, and a firewall 171. The firewall 171 is connected via a router 172 to the data transmission network 4, in particular the worldwide backbone network Internet 41. Authorized units 2/3 can submit and/or modify and/or access projects 101, 102, ..., 10i stored in the persistence storage 10 as project database accessible via the web server 17 through a secure connection over the data transmission network 4. The persistence storage 10 can be used for distributed (e.g. international) networking collaboration holding more than projects 101, 102, ..., 10i, wherein a secure collaborative environment within a project corporation over the backbone internet network 4 is provided by means of the digital platform 1. Authorized units 2/3 are units having registered and authorized accounts on the digital platform 1. Authorized units 2/3 can, for example, access the digital platform 1 using any web-enabled device, including desktop or laptop computers, personal digital assistants (such as iPads, etc.), web-enabled cellular and/or digital phones, and other web-enabled or data transmission network 4 enabled devices. Herein, "web-enabled device" means devices capable of browsing the Internet using an Internet browser, while "network-enabled devices" generally refer to devices allowing access to the digital platform 1 over the data transmission network 4. Furthermore, the digital platform 1 can comprise automated productivity tools, which are modules that supplement the unit 2/3 account 162/163 with professional enhancements for facilitating interactions between different users 2/3 of the digital platform 1, such as between an operation unit 2 and a deployment unit 3, and so on. In the embodiment, the network server of the digital platform 1 is realized as a secure server. For this, "secure server" can for example refer to a server that is registered with a digital certificate authority for the purpose of authenticating the server and providing secure transactions over the Internet. The secure data transmission over the network 4 can further comprise appropriate encryption/decryption processes to ensure the secured network 51, 52, ..., 5i. In summary, the network interfaces of the digital cross-network platform 1 can for example be web interfaces and the network-enabled devices can be web-enabled devices, wherein the digital networking platform 1 comprises selectable productivity tools for interfacing with the projects 101, 102, ..., 10i. In addition, the productivity tools being accessible from a web interface can further comprise a task manager module 143 and a collaboration module 144 and a document management module 145, as described herein.

Each unit 2/3 has a unit or user account 162/163i on the digital networking platform 1 with assigned authentication and authorization credentials for authentication and authorization controlled network access 5 to the digital cross-network platform 1 and the secured cloud-based network 5. The authentication and authorization credentials can for example at least comprise a username and a password in a secured database. However, other authentication and authorization variants, such as biometric-based authentication and authorization, are also imaginable. In particular, the network-enabled devices 2i2/3i2 and the digital platform can be realized as network nodes of the data transmission network 4 comprising physical network interfaces 2i21/3i21/18, for instance, interfaces to LAN, WLAN (Wireless Local Area Network), Bluetooth, GSM (Global System for Mobile Communication), GPRS (Generalized Packet Radio Service), USSD (Unstructured Supplementary Services Data), UMTS (Universal Mobile Telecommunications System) and/or Ethernet or another Wired LAN (Local Area Network) etc. The reference number 4 can be based on IEEE 802.11 or other standards or can comprise different heterogeneous networks such as, for example, a Bluetooth Network, e.g. for installations in roofed-over areas, a mobile radio network with GSM and/or UMTS and/or LTE (Long Term Evolution; also referred to as 3.9G) etc., a wireless LAN, e.g. based on IEEE wireless 802.1x, or also a wired LAN, i.e. a local fixed network, in particular also the PSTN (Public Switched Telephone Network), etc. The interfaces 2i21/3i21/18 of the network nodes 1/2/3 can not only be packet-switched interfaces such as those used directly by network protocols such as Ethernet or Token Ring, but can also be circuit-switched interfaces that can be used with protocols such as PPP (Point to Point Protocol, see IETF RFC), SLIP (Serial Line Internet Protocol), GPRS (Generalized Packet Radio Service), TCP/IP (Transmission Control Protocol/Internet Protocol), i.e. those interfaces for example that do not have a network address such as a MAC or a DLC address. As partially mentioned before, the communication can, for example, take place over the LAN, for instance also by means of special short messages, e.g. SMS (Short Message Services), EMS (Enhanced Message Services), over a signaling channel such as USSD (Unstructured Supplementary Services Data) or other technologies, like MExE (Mobile Execution Environment), GPRS (Generalized Packet Radio Service), WAP (Wireless Application Protocol) or UMTS (Universal Mobile Telecommunications System), or over IEEE wireless 802.1x or via another digital information channel.

Each unit 2/3 has a unit account 1621/1631 assigned in a communication database 161 of the digital networking platform 1 with associated authentication and authorization credentials for a controlled network access 5i1 to secure, cloud-based networks 5/51, 52, ..., 5i provided by the digital cross-network platform 1. Projects 101, 102, ..., 10i held in a persistence storage 10 of the digital networking platform 1 comprise at least one assigned relationship 10i1 between a particular operating unit 2i, one or more deployment units 3i, and a project task 101, 102, ..., 10i.

The digital networking platform 1 comprises a network interface 18 of the digital platform 1 providing network access to the secure, cloud-based networks 5/51, 52, ..., 5i for the operating units 21, 22, ..., 2i and deployment units 31, 32, ..., 3i via the data transmission network 4 by means of the network-enabled devices 2i2/3i2. A project 101, 102, ..., 10i, held in the persistence storage 10 of the digital networking platform 1, is assessible only for assigned units 2/3 via a dedicated, secure network 51, 52, ..., 5i providing upload and download access for project data 10ii related to a project 101, 102, ..., 10i and sharing of project data 10ii with other units 2/3 according to the assigned relationship 10i1.

The digital networking platform 1 comprises a project manager module 14 extracting project data 10ii from a project submission 10i2 of an operating unit 2 requesting a new project 101, 102, ..., 10i. A new project 101, 102, ..., 10i is generated based on the project submission data 10i2 by a project analyzer 142 of the project manager module 14 and wherein related project data 10ii are stored to the persistence storage 10. Submission data 10i2 can for example be submitted by means of an operating unit access interface 12 from an operating unit 21,...,2i to the digital networking platform 1, wherein a corresponding project 101, 102, ..., 10i is generated by means of a submission analyzer module 122 and allocated to a persistence storage 10. Relationships between units 2/3 on a project 101, 102, ..., 10i are defined on an individual basis and based on the certification characteristics assigned to a specific deployment unit 3, such that each pair of units 2/3 has a defined relationship. Each relationship establishes a hierarchical or even relationship between two users: such as deployment unit 3, e.g. certified technician, engineer or repairperson for a specific task, operating unit 2, and so on. By building up the digital platform 1 according to unit 2/3 relationships 10i1, in essence, the secured network structure(s) 5 is given by the structure of the relationships. Instead of a single network with many users, the digital platform 1 defines multiple user-centric networks 5/51, 52,...,5i, which parallel real-world networks 5 of units 2/3 as appropriate network nodes. For the certification, the digital networking platform 1 can for example comprise a certification registrar 15 with a task certification data repository 151 and a certification evaluation module 152, the task certification data repository 151 holding, for each task 1111,1112,...,111i of the task database 111, task certifications 1511, 1512,..., 151i assessible to the deployment units 3 and the certification evaluation module 152 comprising, for each task 1111,1112,...,111i of the task database 111, an assigned certification evaluation process for approving a task certification 1511, 1512,..., 151i for a deployment unit 31,32,...,3i. Upon approving a task certification 1511, 1512,..., 151i, a corresponding certified task accreditation 1632 is assigned for the specific task to said deployment unit 31,32,...,3i.

The digital networking platform 1 comprises a task selector 11 selecting one or more tasks 111i to be executed by a deployment unit 3 from a task database 111 based on the project submission data 10i2, and a task manager module 143 selecting one or more deployment units 3 based on certified skill accreditation data 1632 of the deployment units 3 denoting certified skills 3i1 executable by a specific deployment unit 3. The selected task 111i is assigned to the selected at least one deployment unit 3 providing a relationship 10i1 associated with the new project 101, 102, ..., 10i. The task selector 11 can for example comprise a machine-based matching structure 112, wherein appropriate skill certifications 1511,1512,...,151i are determined to perform a specific task 111i associated with a project 10i by means of the machine-based matching structure 112. At least one deployment unit 31,32,..,3i can for example be determined based on the determined skill certifications 1511,1512,...,151i needed and additional trigger criteria comprising at least location of the operating unit 21,22,...,2i of the submission data 1211,..., 121i and location of available deployment unit 31,32,...,3i. As an embodiment variant, for selecting the deployment unit 31,32,..,3i, mandatory and optional skills 1511,1512,...,151i can be determined by the machine-based matching structure 112 to perform a selected task 111i. Mandatory skills 1511,1512,...,151i are required to complete the selected task 111i. The optional skills 1511,1512,...,151i can at least comprise speaking language parameter and/or additional skill parameter denoting additional services or equipment. The deployment units 31,32,...,3i can for example be filtered for the mandatory skills 1511,1512,...,151i by the machine-based matching structure and matcher 112. Conversely, a scoring structure can be applied for the optional skills 1511,1512,...,151i by the machine-based matching structure 112, wherein the higher score is triggered for a deployment unit 31,32,...,3i the more likely it is that the deployment unit 31,32,...,3i is selected by the machine-based matching structure 112. The scoring can for example be based on best skill matching. The scoring can for example alternatively or additionally be based on highest margin matching taking into account pricing parameter values of a deployment unit 31,32,...,3i and/or expense parameter values and/or travel time or geographic distance parameter values. The scoring can for example further be based on a best-for-platform-growth structure providing higher scores to deployment units 31,32,...,3i which have rarely or never conducted a task 111i using the platform 1, additionally or alternatively. The machine-based matching structure 112 can for example comprise one or more artificial intelligence-based learning structures (AI), in particular machine-based learning structures (ML). The machine-based learning structure (ML) can for example comprise hill climbing, genetic or evolutionary machine-based learning structures or other AI-based structures. Once the operating unit/customer 2 has ordered the service, submitted a project request, the digital platform's custom business logic figures out what skills are necessary to complete the service job. These skills are fed into the matcher-structure of the digital platform 1 together with other data like the location of the operating unit/customer 2 and the location of the deployment unit/technician 3. These required skills are then divided into two groups: mandatory skills and optional skills. Usually, the mandatory skills are required to complete the actual job with a high quality, while the optional skills are usually fluent speaking of the language of the customer using the operating unit 2, additional skills of services or equipment that the operating unit/customer 2 has, but did not order. The deployment units/technicians 3 that do not satisfy the mandatory skills are filtered. For the other aspects, the described scoring system is used. The higher the score, the more relevant the technician is for the job or the better the fit is. The optional skills are treated like "extra points" or "bonus points" in the scoring system. The matcher 112 can use different scoring algorithms to produce different rankings. Next to the "best technician for the job" matching (best skill matching), there is also a "highest margin" scoring, where the pricing of the technician and of expenses and travel time is taken into account. The "best for platform growth" algorithm gives those technicians a higher score that might have theoretical know-how, but have never practically done the job on-site. This algorithm will create a balanced mixed team of experienced technicians and newbies to ensure the education on-site ("learning on the job") without sacrificing any quality levels. These individual algorithms can be implemented as mathematical optimization algorithms such as hill climbing, genetic or evolutionary algorithms or based on machine learning (ML). The result is one or many rankings of the technicians with their suitability for the job. This is then passed to the dispatcher 19.

As a variant, the matcher 112 comprises a novel two-tier matching structure. In a first step, an unsupervised machine-learning structure can e.g. be used to cluster matching parameters of the operating units 2 (as geographic location measuring parameters, as e.g. longitude and latitude parameters provided by a GSM-module, skill specification parameter and/or skill rate parameters, user-specific parameter (age, mobility etc.) associated with an operating units 2 etc.) in the context of given project-specific parameters. The clusters can then be classified by an expert system based on historic data or manually by a human expert. In a second step, the matcher comprises a supervised learning structure, allowing to predictive generation of project development parameters, e.g. indicating a predicted temporal development with corresponding automated work or operation scheduling or probabilities of occurring external events impacting the development, in particular the temporal development, of a project allowing to coordinate and/or schedule risk-mitigation means.

The matcher 112 can comprise and access dedicated measurement devices and sensors to monitor the progress of a project 101, 102, ..., 10i by measuring appropriate measuring parameters. The matcher 112 can be realized to comprise one or more digital analysis structures for analysis and quality control of the development of a project 101, 102, ..., 10i, and thus, for example, to ensure optimized project results during processing. Such monitoring can e.g. comprise triggering the measuring parameters for compliance with predefined project goals, boarder condition values or regulations. The used monitoring and analytical measurement means can comprise a wide range of technologies, in particular optical measuring (e.g. cameras, i.e. optical sensors, light sources, etc.), chemical and mechanical, and engineered dynamic adaptation and improvement indicated by appropriate project 101, 102, ..., 10i parameter pattern or project 101, 102, ..., 10i and/or operating unit 2 parameter pattern recognition e.g. by machine-based learning (ML), etc.. Apart from Al(Artificial Intelligence)-based methods, other principles for real-time recognition of acquired parameter values and/or measurement data are also usable.

With ML-based measurement techniques, the matcher 112 can e.g. use machine learning to identify patterns and regularities based on captured and/or measured project 101, 102, ..., 10i and/or operating unit 2 parameter values. A suitable ML-based system can also evaluate unknown data. The matcher 112 can also use techniques such as "Knowledge Discovery in Databases" and "Data Mining" to find new patterns and/or anomalies within a development of a project 101, 102, ..., 10i, which are particularly concerned with finding new patterns and regularities. As a variant, the matcher 112 uses methods of "Knowledge Discovery in Databases" to generate or preprocess learning data for "machine learning". In turn, techniques from machine learning, for example, can be applied in a later data mining.

In another variant, the matcher 112 comprises structures based on Deep Learning, which is for the present invention a possible learning variant of ML-based devices using artificial neural networks. Deep learning, also called multilayer learning or deep learning, is a machine learning technique that uses artificial neural networks (ANNs) with numerous hidden layers between the input layer and the output layer, which can form a specific internal structure in a learning process that can adaptively store knowledge. With the techniques discussed above, parameter value patterns and/or anomalies within a development of a project 101, 102, ..., 10i can be used, for example, to filter out and avoid project 101, 102, ..., 10i development defects or at least detect them and generate corresponding warning signaling. As discussed above, the invention relates not only to enable secure cross-network collaboration and intelligent matching between projects 101, 102, ..., 10i and/or operating units 2 and/or deployment unit 4, but also in particular to measurement and analysis techniques for the analysis, monitoring and automated quality control of projects 101, 102, ..., 10i and project real-time development, and the predictive generation of project development parameters allowing a predictive measurement of probabilities for occurring risk-events impacting the development of a project based on measured measuring parameters at the project 101, 102, ..., 10i.

The digital networking platform 1 comprises an access controller 141 generating a secure, cloud-based network 5/51, 52, ..., 5i for the new project 101, 102, ..., 10i providing access to the new project 101, 102, ..., 10i for the operating unit 2 and selected deployment unit 3 denoted in the relationship 10i1, wherein the relationship 10i1 is established between a pair of units 2/3 before any communication between the pair of units 2/3 is permitted.

As a further variant, the digital networking platform 1 can for example comprise a dispatcher 19 for notifying the selected one or more deployment units 31,32,...,3i and/or a service provider associated with appropriate deployment units 31,32,...,3i. The dispatcher 19 can for example comprise an auction process providing access to a specific task 111i to suitable deployment units 31,32,...,3i. As there is no guarantee that the deployment unit/technician 3 with the highest score is actually available for the job, the dispatcher 19 has to efficiently find the deployment unit/technician 3 with the highest score or a sufficiently high score that actually is available to do the task/job 1111,1112,...,111i and accepts the task/job 1111,1112,...,111i.This in combination with, for example, legal constraints in certain countries, e.g. Germany, where such digital platforms 1 are not allowed to address any selected deployment unit/technician 3 directly or in some cases even indirectly, the dispatcher component 19 for example contacts the planner of a service company to coordinate the job acceptance. In this case, the planner of a service company technically acts as a deployment unit 3 according to the invention. Different algorithms can for example be used to execute this process efficiently, such as auction-like processes, where the task/job 1111,1112,...,111i is offered at a certain price and the fastest service company as deployment unit 3 to accept the job gets to do the job. Other algorithms can for example optimize different aspects of the digital platform's service network, such as offering the task/job 1111,1112,...,111i first to new members of the platform 1 or to members with high ratings, or to spread the tasks/jobs 1111,1112,...,111i among the participant members, i.e. the deployment units 3, to maximize fairness of the distribution.

As mentioned before, the assigned relationship 10i1 can for example define a hierarchical structure at least comprising two subgroups 2/3, with a first subgroup 2 comprising a plurality of operating units 21, 22, ..., 2i defined by unit accounts 1621 and a second subgroup 3 comprising a plurality of deployment units 31, 32, ..., 3i defined by unit accounts 1631. The secured cloud-based network access 5/51, 52, ..., 5i provided via the data transmission network interface 18 for a specific project 101, 102, ..., 10i can for example be different for the first subgroup 2 of the operating units 21, 22, ..., 2i and the second subgroup 3 of the deployment units 31, 32, ..., 3i. Submission data 10i2 can for example be transferred over an operating unit access interface 12 to the digital networking platform 1 by an operating unit 2, wherein a corresponding project 101, 102, ..., 10i is generated by means of the project analyzer 142 and allocated to the persistence storage 10. The one or more tasks 1111, 1112,...,111i of the task database 111 can for example be selected to be performed by an deployment unit 31,32,...,3i based on the project data 10ii associated with a project 101, 102, ..., 10i by the task selector 11. At least one deployment unit 31,32,...,3i can for example be selected from a deployment unit profile database 163 based on the deployment unit profiles 1631,1632,...,163i to perform the selected one or more tasks 1111, 1112,...,111i, wherein deployment unit profiles 1631,1632,...,163i are matched to the selected one or more tasks 1111, 1112,...,111i and related relationship data 10i1 are generated defining said relationship 10i1 between the new project 101, 102, ..., 10i and the one or more tasks 1111, 1112,...,111i to be performed. For selecting of the at least one deployment unit 31,32,...,3i from the deployment unit profile database 163 based on the deployment unit profiles 1631,1632,...,163i, each deployment unit profile 1631,1632,...,163i can for example comprise at least one certified task accreditation 1632 for one of the selectable tasks 1111, 1112,...,111i of the task database 111.

The digital platform 1 can for example further comprise a quote module 146 or a quote server interface 1461 for interacting periodically with a quote module or quote server, for retrieving financial information from the quote module or quote server, and for storing the retrieved financial information in the persistence storage assigned to a project 101, 102, ..., 10i. The account module 16 can also for example comprise means for displaying and accounting of financial information, the financial information comprising financial account information relative to the unit 2/3 or user accounts 162/163, and a cost basis; and evaluation data related to the financial account information, the evaluation data being generated from the financial account information using retrieved task characteristics data associated with a specific project 101, 102, ..., 10i.

For the predictive generation of future states of a project 101, 102, ..., 10i based on the captured or measured project parameters, the digital platform 1 and the matcher 112, respectively, can further comprise digital replicas of each project 101, 102, ..., 10i. For this, by means of the digital platform 1, the digital replica or digital twin representation of a project 101, 102, ..., 10i is analyzed providing a measure for a future state or operation of the twinned real-world project 101, 102, ..., 10i based on generated value time series of values over the future time period of said future state, the measure e.g. being related to the probability of the occurrence of a predefined event to the project 101, 102, ..., 10i of a possible development pattern. The digital twin of twinned physical project 101, 102, ..., 10i can, according to some embodiments, access the persistence storage 10, and utilize a probabilistic structure creation unit to automatically create a predictive structure that may be used by digital twin modeling processing to create the predictive risk/occurrence probability measure. To process the generated effects captured and measured by physical measuring parameters of measuring sensors and devices associated with the project 101, 102, ..., 10i providing operational and/or structural and/or environmental project parameters on the twinned real-world project 101, 102, ..., 10i of the future time period, the cumulative predictive parameter modelling by machine learning modules further can comprise the step of detecting first anormal or significant effects within a generated and measured time series of parameter value patterns, wherein the detection of anomaly and significant events is triggered by exceeding the measured deviation from a defined threshold value per a single or set of operational and/or environmental project parameters. The digital platform 1 and the matcher 112, respectively, can further detect second anomaly and significant impacting events or project development parameter patterns based on the time series of the defining the status of operation of the digital twin. By means of dynamic time normalization the topological distance between the measured time series of the parameters over a time is determined as a distance matrix. The dynamic time normalization can be realized e.g. based on Dynamic Time Wrapping. A measured time series signal of the project development steps can be matched e.g. as spectral or cepstral value tuples with other value tuples of measured time series signal of project development steps or project impacting event occurrences. The value tuples can be supplemented, for example, with further measurement parameters such as one or more of the present digital twin parameters and/or environmental parameters discussed above. Using a weighting for the individual parameters of each measured value tuple, a difference measure between any two values of the two signals is established, for example a normalized Euclidean distance or the Mahalanobis distance. The matcher 112 searches for the most favorable path from the beginning to the end of both signals via the spanned distance matrix of the pairwise distances of all points of both signals. This can be done e.g. dynamic efficient. The actual path, i.e. the wrapping, is generated by backtracking after the first pass of the dynamic time normalization. For the pure determination, i.e. the corresponding template selection, the simple pass without backtracking is sufficient. The backtracking, however, allows an exact mapping of each point of one signal to one or more points of the respective other signal and thus represents the approximate time distortion. It should be added that in the present case, due to algorithmic causes in the extraction of the signal parameters of the value tuples, the optimal path through the signal difference matrix may not necessarily correspond to the actual time distortion. By means of a statistical data mining unit of the matcher 112, the measured and dynamically time-normalized time series are then clustered into disjoint clusters based on the measured distance matrix (cluster analysis), whereby measured time series of a first cluster index a virtual twin operation or status in a norm range and measured time series of a second cluster index a virtual twin operation or status outside the norm range. Clustering, i.e. cluster analyses, can thus be used to assign similarity structures in the measured time series, whereby the groups of similar measured time series found in this way are referred to here as clusters and the group assignment as clustering. The clustering by means of the matcher 112 is done here by means of data mining, where new cluster areas can also be found by using data mining. The automation of the statistical data mining unit for the clustering of the distance matrix can be realized e.g. based on density based spatial cluster analysis processing with noise, in particular the density based spatial cluster analysis with noise can be realized based on DBScan. DBScan as spatial cluster analysis with noise works density based and is able to detect multiple clusters. Noise points are ignored and returned separately.

As a pre-processing step, e.g. pre-processing, a dimensionality reduction of the time series can be performed. In general, the analysis data described above are composed of a large number of different time series, e.g. with a predefined sampling rate, if required by the dynamics of the twinned project 101, 102, ..., 10i. Here, each variable can be divided into two types of time series, for example: (1) Time-sliced time series, when the time series can be naturally divided into smaller pieces when a process or dynamic of a twinned project 101, 102, ..., 10i is over (e.g., operational cycles, day time cycles etc.); and (2) Continuous time series: When the time series cannot be split in an obvious way and processing must be done on it (e.g., sliding window, arbitrary splitting, ...). In addition, time series can also be univariate or multivariate: (1) Univariate time series: the observed process is composed of only one measurable series of observations (e.g. structural parameters of the twinned project 101, 102, ..., 10i); (2) Multivariate time series: The observed process is composed of two or more measurable series of observations that could be correlated (e.g., structural parameters and condition/state of the twinned project 101, 102, ..., 10i or an element of the twinned project 101, 102, ..., 10i).

The use of time series for processing steps of a project 101, 102, ..., 10i presents a technical challenge, especially if the time series are of different lengths (e.g., operational parameter/environmental measuring parameter time series). In the context of the inventive digital platform 1, it may therefore be technically advantageous to preprocess these time series into a more directly usable technical format using preprocessing. Using the dimensionality reduction method, a latent space can be derived from a set of time series. This latent space can be realized as a multidimensional space containing features that encode meaningful or technically relevant properties of a high-dimensional data set. Technical applications of this concept can be found in natural language processing (NLP) methods with the creation of a word embedding space derived from text data or, in the present case, a time series embedding space, or in image processing, where a convolutional neural network encodes higher-order features of images (edges, colors ...) in its final layers. According to the invention, this can be technically realized by creating a latent space of several time series from replay data and using this latent space as a basis for subsequent tasks such as event detection, classification or regression tasks. In the present case, a latent space can be generated for time series signals with technical approaches such as principal component analysis and dynamic time wrapping, and also with deep learning-based technical approaches similar to those used for computer vision and NLP tasks, such as autoencoders and recurrent neural networks.

Regarding the generation of the time series embedding space, the fundamental technical problem that complicates the technical modeling and other learning problems in the present case is dimensionality. A time series or sequence on which the model structure is to be tested is likely to be different from any time series sequence seen during training. Technically, possible approaches may be based, for example, on n-grams that obtain generalization by concatenating very short overlapping sequences seen in the training set. In the present case, however, the dimensionality problem is combated by learning a distributed representation for words that allows each training set to inform the model about an exponential number of semantically adjacent sentences. The modelling simultaneously learns (1) a distributed representation for each time series along with (2) the likelihood function for time series sequences expressed in terms of these representations. Generalization is achieved by giving a sequence of time series that has never been recognized before a high probability if it consists of time series that are similar (in the sense of a close representation) to time series that form a set that has already been seen. Training such large models (with millions of parameters) within a reasonable time can itself be a technical challenge. As a solution for the present case, neural networks are used, which can be used e.g. for the likelihood function. On two time series sets it could be shown that the approach used here provides significantly better results compared to state-of-the-art n-gram models, and that the proposed approach allows to use longer time series and time series contexts.

In the present case, the ability of multilayer backpropagation networks to learn complex, high-dimensional, nonlinear mappings from large collections of examples makes these neural networks, particularly Convolutional Neural Networks, technical candidates for the time series recognition tasks. However, there are technical problems for application in the present invention: In the technical structures for pattern recognition, typically a manually designed feature extractor collects relevant information from the input and eliminates irrelevant variability. A trainable classifier then categorizes the resulting feature vectors (or strings) into classes. In this scheme, standard, fully connected multilayer networks can be used as classifiers. A potentially more interesting scheme is to eliminate the feature extractor, feed the mesh with "raw" inputs (e.g., normalized images), and rely on backpropagation to turn the first few layers into a suitable feature extractor. While this can be done with an ordinary fully connected feed-forward network with some success for the task of detecting the time series, there are technical issues in the present context. First, time series of measurement parameters can be very large. A fully-linked first layer, e.g., with a few hundred hidden units, would therefore already require several 10'000 weights. An overfitting problem occurs if not enough training data is available. Also the technical requirements for the storage medium grow enormously with such numbers. However, the technical skin problem is that these networks have no inherent invariance with respect to local biases in the input time series. That is, the pre-processing discussed above with the appropriate normalization or other time normalization must normalize and center the time series. Technically, on the other hand, no such pre-processing is perfect.

Second, a technical problem of fully-linked networks is that the topology of the input time series is completely ignored. The input time series can be applied to the network in any order without affecting the training. However, in the present case, the processing process has a strong local 2D structure, and the time series of measurement parameters have a strong 1D structure, i.e., measurement parameters which are temporally adjacent are highly correlated. Local correlations are the reason that extracting and combining local features of the time series before recognizing the spatial or temporal objects is proposed in the context of the invention. Convolutional neural networks thereby enforce the extraction of local features by restricting the receptive field of hidden units to local units. In the present case, the use of Convolutional Networks technically ensures in the recognition of the time series that displacement and depletion invariance is achieved, namely through the application of local receptive fields, joint weights (or weight replications), and temporal subsampling of the time series. The input layer of the networks thereby receives time series that are approximately time-normalized and centered (see Time Wrapping above).

For generating the latent space for the time series signals, as described above, e.g. principal component analysis and dynamic time wrapping or deep learning based technical approaches can be chosen, such as the use of recurrent neural networks. However, in the present invention, it should be noted that learning information over longer time intervals using recurrent backpropagation can take a very long time, usually due to insufficient decaying error feedback. Therefore, in the context of the invention, the use of a new, efficient and gradient-based method. Here, the gradient is truncated where it does no harm so that the network can learn to bridge minimal time delays of more than 1000 discrete time steps by enforcing a constant error flow through constant rotations of the errors within a specific unit. Multiplicative gate units thereby learn to open and close access to the constant error flow. By this embodiment according to the invention, the network remains local in space and time with respect to learning the time series.

With respect to the autoencoder embodiment comprised by the matcher 112, the network is trained in an unsupervised manner (unsupervised learning) so that the input signal can first be converted to low-dimensional latent space and reconstructed by the decoder with minimal information loss. The method can be used to convert high-dimensional time series into low-dimensional ones by training a multilayer neural network with a small central layer to reconstruct the high-dimensional input vectors. Gradient descent can be used to fine-tune the weights in such "autoencoder" networks. However, this only works well if the initial weights are close to a suitable solution. In learning the time series, the embodiment described here provides an effective way of initializing the weights that allows the autoencoder network to learn low-dimensional codes that perform better than principal component analysis as a tool for reducing the dimensionality of data. Dimensionality reduction of time series according to the invention facilitates classification, visualization, communication, and storage of high-dimensional time series. One possible method is principal component analysis (PCA), which finds the directions of greatest variance in the time series and represents each data point by its coordinates along each of these directions. For example, as an embodiment variant, a nonlinear generalization of PCA can be used by using an adaptive multilayer "encoder" network to transform high-dimensional time series into low-dimensional codes, and a similar decoder network to recover the time series from the codes. In the embodiment, starting from random weights in the two networks, they can be trained together by minimizing the discrepancy between the original time series and their reconstruction. The system obtains the required gradients by applying a chain rule to propagate the error derivatives back first through the decoder network and then through the encoder network. This system is referred to here as an autoencoder.

The above-discussed unsupervised machine learning procedure for dynamic time-wrapping based (DTW) time series detection, can also be done supervised. Two execution variants of learning strategies, supervised and unsupervised, can be applied with the DTW for the time series according to the invention. For example, two supervised learning methods, incremental learning and learning with priority denial, can be distinguished as execution variants. The incremental learning procedure is conceptually simple, but typically requires a large set of time series for matching. The learning procedure with priority denial can effectively reduce the matching time, while typically slightly decreasing the recognition accuracy. For the execution variant of unsupervised learning, in addition to the variant discussed above, an automatic learning approach based on most-matching learning and based on learning with priority and rejection can also be used, for example. The most-matching learning revealed here can be used to intelligently select the appropriate time series for system learning. The effectiveness and efficiency of all three machine learning approaches for DTW just proposed can be demonstrated using appropriate time series detection test.

In case of detecting first and/or second anomaly and significant project 101, 102, ..., 10i developments associated with a digital twin respectively with the twinned project 101, 102, ..., 10i, the measured event dynamics or statuses are transmitted as a function of time as input data patterns to a machine-learning unit and the measuring parameters of the digital twin are adjusted by means of an electronic control comprised by the digital platform 1 based on the output values of the machine-learning unit, wherein the machine-learning unit classifies the input patterns on the basis of learned patterns and generates corresponding metering parameters. By additionally measuring structural/operational parameters comprising measurement parameters for detecting physical properties of the twinned project 101, 102, ..., 10i by means of measuring devices, and/or project parameters by means of proprioceptive sensors or measuring devices, and/or environmental parameters by means of exteroceptive sensors or measuring devices e.g., the machine-learning unit can be adapted to the input patterns on the basis of the measured time series data. e.g., in addition to the measured time series of dynamics/statuses, one or more of the project 101, 102, ..., 10i operational parameters and/or the structural parameters and/or the environmental parameters can be transmitted as a function of time to the machine-learning unit as an input data pattern. The machine-learning unit may be implemented, for example, based on static or adaptive fuzzy logic systems and/or supervised or unsupervised neural networks and/or fuzzy neural networks and/or genetic algorithm-based systems. The machine-learning unit may comprise, for example, Naive Bayes classifiers as a machine-learning structure. The machine-learning unit may be implemented, for example, based on supervised learning structures comprising Logistic Regression and/or Decision Trees and/or Support Vector Machine(SVM) and/or Linear Regression as machine-learning structure. For example, the machine-learning unit may be realized based on unsupervised learning structures comprising K-means clustering or K-nearest neighbor and/or dimensionality reduction and/or association rule learning. The machine-learning unit may be realized, for example, based on reinforcement learning structures comprising Q-learning. For example, the machine-learning unit may be implemented based on ensemble learning comprising bagging (bootstrap aggregating) and/or boosting and/or random forest and/or stacking. Finally, the machine-learning unit can be realized based on neural network structures comprising feedforward networks and/or Hopfield networks and/or convolutional neural networks or deep convolutional neural networks.

The digital twin of the twinned physical project 101, 102, ..., 10i, i.e. the digital virtual replicas can e.g. be constantly updated and analyzed by measuring data from their real counterparts, i.e. the twinned physical project 101, 102, ..., 10i and/or from the physical environment that surrounds them in their real physical project 101, 102, ..., 10i. The digital platform 1 is able to react on the digital twin of a project 101, 102, ..., 10i and it can initiate automated analysis related to historical data, current data and forecasts. The digital platform 1 can, thus, be able to predict what will happen in each case and the associated risk, and thus be able automatically propose actions and provide appropriate signaling. Even the virtual twin itself or the digital platform 1, respectively, can act, when technically realized as such, on the technical means of its real-world twined project 101, 102, ..., 10i, given that the two are linked by appropriate technical means.

Recording and storing of the measurement data and captured parameter values as replay data related to a project 101, 102, ..., 10i by means of the data-structures of the persistence storage 10, i.e. the stream of measuring parameters measured by the sensors and/or measuring devices associated with the twinned project 101, 102, ..., 10i allows the realization of the replay function according to an aspect of the invention. The variant with the replay functionality of the digital platform 1 is intended as a specific embodiment of the system according to the invention. It can be realized with and without the above discussed project development optimization or predictive development functionality, i.e. with and without adjusting the digital twin parameters or with or without adjusting operational/structural/environmental parameters of the twinned project 101, 102, ..., 10i by means of the electronic signaling system control based on the output values of the machine-learning unit. In principle, the recording of the project parameters and measuring values 10ii can be triggered by the detection of a first and/or second event detected by its anomaly or significance within the time series. In such a replay embodiment with provision of analysis measurement data (as replay data or analysis measurement data) for monitoring a time period in the replay mode of the digital replica and/or twinned project 101, 102, ..., 10i. By means of an assembly (BG) comprising a client for time-shifted retrieval of analysis measurement data, a time-shifted to real-time section of the replay data is selected, e.g., by means of a time tag (time-based tagging) or an event area displayed by the digital platform 1 to the operational unit 2 or deployment unit 3 for selection, and requested, e.g., by means of a request from digital platform 1. The digital platform 1 provides the requested time section to the operational or deployment unit 2/3, the digital platform 1 compiling the requested time section of the replay data in the form of multimedia data packets and transmits them over the network to the client of the assembly at the operational unit 2 or deployment unit 3. The client unpacks the multimedia data packets and displays them at the operational unit 2 or deployment unit 3 e.g. on a monitor or the like. The assembly can be part of the digital platform 1, e.g. implemented as part of an electronic system control, or as a network assembly which can access the digital platform 1 or the system control with integrated digital platform 1 via a network. A time data set for a time range available for retrieval may be highlighting on a GUI e.g. including an event detected by the digital platform 1. The entire real time analysis data stream can be recorded or only time ranges of the analysis data stream, i.e. the replay data, in which first and/or second events were detected by the digital platform 1. An embodiment according to the invention can also be implemented in such a way that an operational or deployment unit 2/3 can jump to any point in time in the past of the recorded analysis data stream, i.e. independently of anomaly event detections. Also, an operational or deployment unit 2/3 can, e.g., time-delayed beyond a certain time range, retrieve the analysis measurement data from the stored replay data stream, jump forward (forward) or backward (rewind) one time range in the recorded data stream at a time x. In particular, a further embodiment can be realized in such a way that the connected twinned project 101, 102, ..., 10i respectively its digital twin, can be set again by the electronic system controller to the exact operating mode or status with the same measuring parameters as in the detected event area. The digital twin and/or the connected twinned project 101, 102, ..., 10i can thus be run through the event area again in real time, e.g. for testing, optimization or other verification purposes related to a project development.

### References

1 Digital networking platform
   10 Persistence storage holding project data
      101, 102, ..., 10i Projects (P₁, ... Pᵢ) and project data, respectively
      10i1 Relationships assigned to Project Pᵢ with Operating Unit Sₓ, Task T_{y} and Deployment Unit E_{z}
      10i2 Project submission of Operating Unit Sₓ for Project Pᵢ
      10ii Project data
   11 Task selector
      111 Task database
         1111 Task T₁ 1112 Task T₂
            ...
         111i Task Tᵢ
      112 Machine-based matching structure/Matcher
         1121 Matching algorithm
   12 Operating unit access interface
      121 Submission database
         1211 Submission data of S₁
         1212 Submission data of S₂
            ...
         121i Submission data of Sᵢ
      122 Submission analyzer
   13 Deployment unit access interface
      131 Certification request
      132 Certification verification
   14 Project manager module
      141 Access controller
      142 Project analyzer
      143 Task manager module
      144 Collaboration module
      145 Document management module
      146 Quote module
         1461 Quote server interface
         1462 Quote server
   15 Certification registrar
      151 Skill certification data repository
         1511 Skill certification C₁
         1512 Skill certification C₂
            ...
         151i Skill certification Cᵢ
      152 Certification evaluation module
   16 Account module
      161 Communication database
      162 Profile database holding operating unit accounts
         1621 Operating unit profiles
      163 Profile database holding deployment unit accounts
         1631 Deployment unit profiles
         1632 Certified skill accreditations
      164 Billing/Accounting module
   17 Web server
      171 Firewall
      172 Router
   18 Network Interface
   19 Dispatcher
2 Operating units (production units)
   21, 22, ..., 2i Operating unit (S₁, S₂, ..., Sᵢ)
   2i1 Requests of the operating unit Sᵢ (2i)
   2i2 Network-enabled device of operating unit Sᵢ (2i) 2i21 Network interface
3 Deployment units
   31, 32, ..., 3i Deployment unit (E₁, E₂, ..., Eᵢ)
   3i1 Skill certifications of deployment unit Eᵢ (3i)
   3i2 Network-enabled device of deployment unit Eᵢ (3i) 3i21 Network interface
4 Data Transmission Network
   41 Worldwide backbone network Internet
5 Secure cloud-based network
   51, 52, ..., 5i Dedicated secure network
   5i1 Controlled cloud-based network access to secure network 5i

### Embodiment variant

1 Digital networking platform
   1.1 service task database
      1.11 first service task
      1.12 second service task
      1.13 third service task
   1.2 service provider interface/technician interface
      1.21 first service provider/first technician
      1.22 second service provider/second technician
      1.23 third service provider/third technician
   1.3 input data base
      1.31 input data from 1.21
      1.32 input data from 1.22
      1.33 input data from 1.23
   2.1 assessment unit
      2.11 first/a skill level
      2.12 second/another skill level
      2.13 third/yet another skill level
   2.2 training unit
      2.21, 2.22, 2.23 training session
   3.1 matching unit
      11.1 intelligent algorithm
   3.2 service provider profile database
      3.21 service provider data related to allocated 1.11, 1.12, 1.13
      3.22 service provider data related to successfully completed 1.11, 1.12, 1.13 (number of, time need, costs..)
      3.23 service provider data related to language skills (writing, speaking)
      3.24 service provider data related to home address
      3.25 service provider data related to travelling flexibility (car, train, plane, individual and/or public transport)
      3.26 service provider data related to equipment
      3.27 service provider data related to further training ability 1.21, 1.22. 1.23
   3 Purchaser
   5 communication module for bi-directional training communication
   5.1 service task ordering interface
   6.1 feedback input interface
      6.11 feedback data
      6.12 feedback connection
   7.1 feedback input interface
      7.11 feedback data
   8 rating unit

## Claims

1. A digital platform (1) for providing controlled project-driven networking interaction between operating units (2) and deployment units (3), the units (2/3) accessing the digital platform (1) by network-enabled devices (2i2/3i2) via a data transmission network (4), each unit (2/3) having a unit account (1621/1631) assigned in a communication database (161) of the digital platform (1) with associated authentication and authorization credentials for a controlled network access (5i1) to secure, cloud-based networks (5/51, 52, ..., 5i) provided by the digital platform (1), wherein projects (101, 102, ..., 10i), held in a persistence storage (10) of the digital platform (1), comprise at least one assigned relationship (10i1) between an operating unit (2i), one or more deployment units (3i), and a project task (101, 102, ..., 10i), and wherein the digital platform (1) comprises a network interface (18) of the digital platform (1) providing network access to the secure, cloud-based networks (5/51, 52, ..., 5i) for the operating units (21, 22, ..., 2i) and deployment units (31, 32, ..., 3i) via the data transmission network (4) by means of the network-enabled devices (2i2/3i2), **characterized by**
a project (101, 102, ..., 10i), held in the persistence storage (10) of the digital platform (1), is only accessible for assigned units (2/3) via a dedicated, secure network (51, 52, ..., 5i) providing upload and download access of project data (10ii) related to a project (101, 102, ..., 10i) and sharing of project data (10ii) with other units (2/3) according to the assigned relationship (10i1),
a project manager module (14) extracting project data (10ii) from a project submission (10i2) of an operating unit (2) requesting a new project (101, 102, ..., 10i), wherein a new project (101, 102, ..., 10i) is generated based on the project submission data (10i2) by a project analyzer (142) of the project manager module (14) and wherein related project data (10ii) are stored to the persistence storage (10),
a task selector (11) selecting one or more tasks (111i) to be executed by a deployment unit (3) from a task database (111) based on the project submission data (10i2), and a task manager module (143) selecting one or more deployment units (3) based on certified skill accreditation data (1632) of the deployment units (3) denoting certified skills (3i1) executable by a specific deployment unit (3), wherein the selected task (111i) is assigned to the selected at least one deployment unit (3) providing a relationship (10i1) associated with the new project (101, 102, ..., 10i),
the task selector (11) comprising a machine based matching structure and matcher (112), wherein appropriate skill certifications (1511, 1512,...,151i) are determined to perform a specific task (111i) associated with a project (10i) by means of the machine-based matching structure and matcher (112), and wherein at least one deployment unit (31,32,..,3i) is determined based on the determined skill certifications (1511,1512,...,151i) needed and additional trigger criteria comprising at least location of the operating unit (21,22,...,2i) of the submission data (1211,..., 121i) and location of available deployment unit (31,32,...,3i), wherein for selecting the deployment unit (31,32,..,3i), the determined skill certifications (1511,1512,...,151i) comprise mandatory and optional skills (1511,1512,...,151i) determined by the machine-based matching structure and matcher (112) to perform a selected task (111i), wherein mandatory skills (1511,1512,...,151i) are required to complete the selected task (111i), and wherein the optional skills (1511,1512,...,151i) at least comprise speaking language parameter and/or additional skill parameter denoting additional services or equipment, and for selecting the deployment unit (31,32,..,3i), the deployment units (31,32,...,3i) are filtered for the mandatory skills (1511,1512,...,151i) by the machine-based matching structure and matcher (112), while a scoring structure is applied for the optional skills (1511,1512,...,151i) by the machine-based matching structure and matcher (112), wherein the scoring is based on highest margin matching taking into account pricing parameter values of a deployment unit (31,32, ... ,3i) and/or expense parameter values and/or travel time or geographic distance parameter values, and wherein the higher score the more likely it is that the deployment unit (31,32,...,3i) is selected and triggered by the machine-based matching structure and matcher (112),
in that for a generation of future states of a project (101, 102, ..., 10i) based on the captured or measured project parameters, the matcher (112) comprises digital replicas of each project (101, 102, ... , 1 0i), the digital replica of a project (101, 102, ... , 10i) being analyzed providing a measure for a future state or operation of a twinned real-world project (101, 102, ... , 10i) based on generated value time series of values over the future time period of said future state, the measure being related to the probability of the occurrence of a predefined event to the project (101, 102, ... , 10i) of a possible development pattern, wherein a detection of anomaly and significant events is triggered by exceeding the measured deviation from a defined threshold value per a single or set of operational and/or environmental project parameters and wherein the project is monitored and its development predicted based on the times series and quantifying anomaly occurrences measurements by triggering for anomaly events within the times series, and
an access controller (141) generating a secure, cloud-based network (5/51, 52, ..., 5i) for the new project (101, 102, ..., 10i) providing access to the new project (101, 102, ..., 10i) for the operating unit (2) and selected deployment unit (3) denoted in the relationship (10i1), wherein the relationship (10i1) is established between a pair of units (2/3) before any communication between the pair of units (2/3) is permitted.

2. The digital platform (1) according to claim 1, **characterized in that** the scoring is based on best skill matching.

3. The digital platform (1) according to one of claims 1 to 2, **characterized in that** the scoring is further based on a best-for-platform-growth structure providing higher scores to deployment units (31,32,...,3i) which have rarely or never conducted a task (111i) using the platform (1).

4. The digital platform (1) according to one of claims 1 to 3, **characterized in that** the machine-based matching structure (112) comprises one or more machine-based learning structures (ML).

5. The digital platform (1) according to claim 4, **characterized in that** the machine-based learning structure (ML) comprises hill climbing, genetic or evolutionary machine-based learning structures.

6. The digital platform (1) according to one of claims 1 to 5, **characterized in that** the digital networking platform (1) comprises a dispatcher (19) for notifying the selected one or more deployment units (31,32,...,3i) and/or a service provider associated with appropriate deployment units (31,32,...,3i).

7. The digital platform (1) according to claim 6, **characterized in that** the dispatcher (19) comprises an auction process providing access to a specific task (111i) to suitable deployment units (31,32,...,3i).

8. The digital platform (1) according to one of claims 1 to 7, **characterized in that** each assigned relationship (10i1) defines a hierarchical structure at least comprising two subgroups (2/3), with a first subgroup (2) comprising a plurality of operating units (21, 22, ..., 2i) defined by unit accounts (1621) and a second subgroup (3) comprising a plurality of deployment units (31, 32, ..., 3i) defined by unit accounts (1631).

9. The digital platform (1) according to claim 8, **characterized in that** the secured cloud-based network access (5/51, 52, ..., 5i) provided via the data transmission network interface (18) for a specific project (101, 102, ..., 10i) is different for the first subgroup (2) of the operating units (21, 22, ..., 2i) and the second subgroup (3) of the deployment units (31, 32, ..., 3i).

10. The digital platform (1) according to claim 9, **characterized in that** submission data (10i2) are transferred over an operating unit access interface (12) to the digital networking platform (1) by an operating unit (2), wherein a corresponding project (101, 102, ..., 10i) is generated by means of the project analyzer (142) and allocated to the persistence storage (10).

11. The digital platform (1) according to claim 10, **characterized in that** the one or more tasks (1111, 1112,...,111i) of the task database (111) are selected to be performed by a deployment unit (31,32,...,3i) based on the project data (10ii) associated with a project (101, 102, ..., 10i) by the task selector (11).

12. The digital platform (1) according to claim 11, **characterized in that** at least one deployment unit (31,32,...,3i) is selected from a deployment unit profile database (163) based on the deployment unit profiles (1631,1632,...,163i) to perform the selected one or more tasks (1111, 1112,...,111i), wherein deployment unit profiles (1631,1632,...,163i) are matched to the selected one or more tasks (1111, 1112,...,111i) and related relationship data (10i1) are generated defining said relationship (10i1) between the new project (101, 102, ..., 10i) and the one or more tasks (1111, 1112,...,111i) to be performed.

13. The digital platform (1) according to claim 12, **characterized in that** for selecting of the at least one deployment unit (31,32,...,3i) from the deployment unit profile database (163) based on the deployment unit profiles (1631,1632,...,163i), each deployment unit profile (1631,1632,...,163i) comprises at least one certified task accreditation (1632) for one of the selectable tasks (1111, 1112,...,111i) of the task database (111).

14. The digital platform (1) of one of claims 1 to 13, **characterized in that** the network interface (18) is a web interface of a web server (17) of the digital platform (1) and the network-enabled devices (2i2/3i2) are web-enabled devices, wherein the digital networking platform (1) comprises selectable productivity tools for interfacing with the project (101, 102, ..., 10i), the productivity tools being accessible from a web interface and at least comprising a task manager module (143) and/or a collaboration module (144) and/or a document management module (145).

15. The digital platform (1) according to one of claims 1 to 14, **characterized in that** the platform (1) further comprises a quote module (146) and/or a quote server interface (1461) for interacting periodically with a quote server (1462), retrieving financial information by means of the quote module (146), and for storing the retrieved financial information in the persistence storage (10) assigned to a project (101, 102, ..., 10i).

16. The digital platform (1) according to claim 15, **characterized in that** the digital networking platform (1) comprises a billing module (164) of an account module (16) for displaying and accounting of financial information, the financial information comprising financial account information relative to the unit (2/3) or unit accounts (1621/1631), and a cost basis; and evaluation data related to the financial account information, the evaluation data being generated from the financial account information using retrieved task characteristics data associated with a specific project (101, 102, ..., 10i).

17. The digital platform (1) according to one of claims 1 to 16, **characterized in that** the persistence storage (10) is used in a distributed networking collaboration environment, holding more than the project data (10ii) comprising the relationships (10i1) and the project submission data (10i2), for providing a secure collaborative environment within a project corporation over the worldwide backbone network (41).

18. The digital platform (1) according to one of claims 1 to 17, **characterized in that** the authentication and authorization credentials at least comprise a username and a password in the secured communication database (161).

19. The digital platform (1) according to one of claims 1 to 18, **characterized in that** the digital networking platform (1) comprises a certification registrar (15) with a task certification data repository (151) and a certification evaluation module (152), the task certification data repository (151) holding, for each task (1111,1112,...,111i) of the task database (111), assessible task certifications (1511, 1512,..., 151i) and the certification evaluation module (152) comprising, for each task (1111,1112,...,111i) of the task database (111), an assigned certification evaluation process for approving a task certification (1511, 1512,..., 151i) for a deployment unit (31,32,...,3i), wherein upon approving a task certification (1511, 1512,..., 151i), a corresponding certified task accreditation (1632) is assigned for the specific task to said deployment unit (31,32,...,3i).

20. The digital platform (1) according to one of claims 1 to 19, **characterized in that** by means of the at least one sensor associated with a twinned physical replica of the project (101, 102, ..., 10i), structural, operational and/or environmental status parameters (10ii) of the real-world project (101, 102, ..., 10i) are measured, monitored, and transmitted to the digital platform (1), wherein the at least one sensor comprise one or more associated exteroceptive sensors or measuring devices for sensing exogen environmental parameters physically impacting the real-world project (101, 102, ..., 10i) and/or one or more proprioceptive sensors or measuring devices for sensing endogen operating or status parameters of the real-world project (101, 102, ..., 10i), wherein the sensors or measuring devices comprise interfaces for setting one or more wireless or wired connections between the digital platform and the sensors or measuring devices, data links being settable by means of the wireless or wired connections between the digital platform (1) and the sensors or measuring devices associated with the real-world asset transmitting the project status parameters (10ii) measured and/or captured by the sensors or measuring devices to the digital platform (1), wherein the status parameters (10ii) are assigned to the digital twin representation, the values of the status parameters (10ii) associated with the digital twin representation being dynamically monitored and adapted based on the transmitted parameters (10ii), and wherein the digital twin representation comprises data structures representing states of each of a plurality of subsystems of the real-world project (101, 102, ..., 10i) holding the parameter values (10ii) as a time series of a time period,
**in that**, by means of the digital platform (1), data structures for the digital twin representation representing future states of each of the plurality of subsystems of the real-world project (101, 102, ..., 10i)are generated as value time series over a future time period based on an application of simulations using cumulative damage modelling processing, the cumulative damage modelling generating the effect of the operational and/or environmental asset parameters on the twinned real-world project (101, 102, ..., 10i) of the future time period, and
**in that**, by means of the digital platform (1), the digital twin representation is analyzed providing a measure for a future state or operation of the twinned real-world project (101, 102, ..., 10i) based on the generated value time series of values over said future time period, the measure being related to the probability of the occurrence of a predefined physical event with a certain strength or physical characteristic physically impacting the real-world project (101, 102, ..., 10i) or the probability measure of the occurrence of a predefined state of the real-world project (101, 102, ..., 10i), wherein the physically measurable probability measure for the occurrence or development of the predefined physical event is established based on frequency and severity of historical measuring data of the predefined physical event by means of a predicting machine learning module using the measured historical timeseries data.

21. The digital platform (1) according to claim 20, **characterized in that** for avatar measurements of evolving real-world measuring parameters (10ii) the control of an operation or status of the development of the real world project (101, 102, ..., 10i) is optimized or adjusted to converge with predefined operational and/or status asset parameters of the specific real-world project (101, 102, ..., 10i) based on the provided measure for a future state or operation of the twinned real-world project (101, 102, ..., 10i) and/or based on the generated value time series of values over said future time period, wherein in case of an optimized control of operation, the optimized control of operation is generated to jointly and severally increase the specific operating performance criteria of an operating unit (2) in time and future of the real-world project (101, 102, ..., 10i) or decrease a measure for an occurrence probability associated with the operation or status of the real-world project (101, 102, ..., 10i) within a specified probability range.

22. The digital platform (1) according to one of the claims 20 or 21, **characterized in that** the decrease of the measure for an occurrence probability of anormal development associated with the recorded times series of the real-world project (101, 102, ..., 10i) is based on an optimized or adjusted interaction of at least one operational unit (2) with the project (101, 102, ..., 10i) controlled by the digital platform (1).

23. The digital platform (1) according to one of the claims 1 to 22, **characterized in that** the digital platform (1) further comprises cyber-physical twin structures providing an evolving digital representation of a real world project (101, 102, ..., 10i) for monitoring and/or predicting project development times series and quantifying anomaly occurrences measurements by triggering for anomaly events within the times series.

## Patentansprüche

1. Digitale Plattform (1) zum Bereitstellen einer kontrollierten projektgesteuerten Netzwerkinteraktion zwischen Betriebseinheiten (2) und Einsatzeinheiten (3), wobei die Einheiten (2/3) durch netzwerkfähige Vorrichtungen (2i2/3i2) über ein Datenübertragungsnetzwerk (4) auf die digitale Plattform (1) zugreifen, wobei jede Einheit (2/3) ein Einheitskonto (1621/1631) aufweist, das in einer Kommunikationsdatenbank (161) der digitalen Plattform (1) mit zugeordneten Authentifizierungs- und Autorisierungsdaten für einen kontrollierten Netzwerkzugang (5i1) sicheren, cloudbasierten Netzwerken (5/51, 52, ..., 5i) zugewiesen ist, die von der digitalen Plattform (1) bereitgestellt werden, wobei Projekte (101, 102, ..., 10i), die in einem Persistenzspeicher (10) der digitalen Plattform (1) gehalten werden, mindestens eine zugewiesene Beziehung (10i1) zwischen einer Betriebseinheit (2i), einer oder mehreren Einsatzeinheiten (3i) und einer Projektaufgabe (101, 102, ..., 10i) umfassen und wobei die digitale Plattform (1) eine Netzwerkschnittstelle (18) der digitalen Plattform (1) umfasst, die Netzwerkzugriff auf die sicheren, cloudbasierten Netzwerke (5/51, 52, ..., 5i) für die Betriebseinheiten (21, 22, ..., 2i) und Einsatzeinheiten (31, 32, ..., 3i) über das Datenübertragungsnetzwerk (4) mittels der netzwerkfähigen Vorrichtungen (2i2/ 3i2) bereitstellt, **gekennzeichnet durch**
ein Projekt (101, 102, ..., 10i), das in dem Persistenzspeicher (10) der digitalen Plattform (1) gehalten wird und nur für zugewiesene Einheiten (2/3) über ein dediziertes, sicheres Netzwerk (51, 52, ..., 5i) zugänglich ist, das einen Upload- und Download-Zugriff von Projektdaten (10ii) in Bezug auf ein Projekt (101, 102, ..., 10i) und gemeinsames Nutzen von Projektdaten (10ii) mit anderen Einheiten (2/3) gemäß der zugewiesenen Beziehung (10i1) bereitstellt,
ein Projektmanagermodul (14), das Projektdaten (10ii) aus einer Projekteinreichung (10i2) einer Betriebseinheit (2) extrahiert, die ein neues Projekt (101, 102, ..., 10i) anfordert, wobei ein neues Projekt (101, 102, ..., 10i) basierend auf den Projekteinreichungsdaten (10i2) durch einen Projektanalysator (142) des Projektmanagermoduls (14) erzeugt wird, und wobei zugehörige Projektdaten (10ii) in dem Persistenzspeicher (10) gespeichert werden,
einen Aufgabenselektor (11), der eine oder mehrere Aufgaben (111i), die von einer Einsatzeinheit (3) ausgeführt werden sollen, aus einer Aufgabendatenbank (111) basierend auf den Projekteinreichungsdaten (10i2) auswählt, und ein Aufgabenmanagermodul (143), das eine oder mehrere Einsatzeinheiten (3) basierend auf den zertifizierten Fertigkeitsakkreditierungsdaten (1632) der Einsatzeinheiten (3) auswählt, die zertifizierte Fertigkeiten (3i1) bezeichnen, die von einer spezifischen Einsatzeinheit (3) ausführbar sind, wobei die ausgewählte Aufgabe (111i) der ausgewählten mindestens einen Einsatzeinheit (3) zugewiesen wird, die eine Beziehung (10i1) bereitstellt, die dem neuen Projekt (101, 102, ..., 10i) zugeordnet ist,
den Aufgabenselektor (11), der eine maschinenbasierte Abgleichstruktur und einen Abgleicher (112) umfasst, wobei passende Fertigkeitszertifizierungen (1511, 1512, ..., 151i), um eine spezifische Aufgabe (111i) durchzuführen, die einem Projekt (10i) zugeordnet ist, mittels der maschinenbasierten Abgleichstruktur und des Abgleichers (112) bestimmt werden, und wobei mindestens eine Einsatzeinheit (31, 32, ..., 3i) basierend auf den bestimmten Fertigkeitszertifizierungen (1511, 1512, ..., 151i), die benötigt werden, und zusätzlichen Auslösekriterien bestimmt wird, die mindestens den Ort der Betriebseinheit (21, 22, ..., 2i) der Einreichungsdaten (1211, ..., 121i) und den Ort der verfügbaren Einsatzeinheit (31, 32, ..., 3i) umfassen, wobei zum Auswählen der Einsatzeinheit (31,32, ...,3i) die bestimmten Fertigkeitszertifizierungen (1511, 1512, ...,151i) obligatorische und optionale Fertigkeiten (1511, 1512, ...,151i) umfassen, die von der maschinenbasierten Abgleichstruktur und dem Abgleicher (112) bestimmt werden, um eine ausgewählte Aufgabe (111i) durchzuführen, wobei obligatorische Fertigkeiten (1511, 1512, ..., 151i) erforderlich sind, um die ausgewählte Aufgabe (111i) abzuschließen, und wobei die optionalen Fertigkeiten (1511, 1512, ..., 151i) mindestens einen Parameter des Sprechens von Sprache und/oder einen zusätzlichen Fertigkeitsparameter umfassen, der zusätzliche Dienste oder Ausrüstung bezeichnet, und zum Auswählen der Einsatzeinheit (31, 32, ..., 3i) die Einsatzeinheiten (31, 32, ..., 3i) durch die maschinenbasierte Abgleichstruktur und den Abgleicher (112) nach den obligatorischen Fertigkeiten (1511, 1512, ..., 151i) gefiltert werden, während für die optionalen Fertigkeiten (1511, 1512, ...,151i) durch die maschinenbasierte Abgleichstruktur und den Abgleicher (112) eine Bewertungsstruktur angewendet wird, wobei die Bewertung auf Höchst-Margenabgleich unter Berücksichtigung von Preisparameterwerten einer Einsatzeinheit (31, 32, ..., 3i) und/oder Kostenparameterwerten und/oder Reisezeit- oder geografischen Entfernungsparameterwerten basiert, und wobei, je höher die Bewertung ist, desto höher die Wahrscheinlichkeit ist, dass die Einsatzeinheit (31, 32, ..., 3i) von der maschinenbasierten Abgleichstruktur und dem Abgleicher (112) ausgewählt und ausgelöst wird,
**dadurch, dass** der Abgleicher (112) für eine Erzeugung zukünftiger Zustände eines Projekts (101, 102, ..., 10i) basierend auf den erfassten oder gemessenen Projektparametern digitale Nachbildungen jedes Projekts (101, 102, ..., 10i) umfasst, wobei die digitale Nachbildung eines Projekts (101, 102, ..., 10i), das analysiert wird, ein Maß für einen zukünftigen Zustand oder einen zukünftigen Betrieb eines realen Zwillingsprojekts (101, 102, ..., 10i) basierend auf einer erzeugten Wertzeitreihe von Werten über die zukünftige Zeitspanne des zukünftigen Zustands bereitstellt, wobei sich das Maß auf die Wahrscheinlichkeit des Eintretens eines vordefinierten Ereignisses für das Projekt (101, 102, ..., 10i) eines möglichen Entwicklungsmusters bezieht, wobei eine Erkennung einer Anomalie und von signifikanten Ereignissen durch Überschreiten der gemessenen Abweichung von einem definierten Schwellenwert für einen einzelnen oder einen Satz von Betriebs- und/oder Umgebungsprojektparametern ausgelöst wird und wobei das Projekt überwacht und seine Entwicklung basierend auf der Zeitreihe und Quantifizieren von Messungen von Anomalievorkommen durch Auslösen für Anomalieereignisse innerhalb der Zeitreihe vorhergesagt wird, und
eine Zugriffssteuereinheit (141), die ein sicheres, cloudbasiertes Netzwerk (5/51, 52, ..., 5i) für das neue Projekt (101, 102, ..., 10i) erzeugt, das Zugriff auf das neue Projekt (101, 102, ..., 10i) für die Betriebseinheit (2) und die ausgewählte Einsatzeinheit (3) bereitstellt, die in der Beziehung (10i1) bezeichnet ist, wobei die Beziehung (10i1) zwischen einem Paar von Einheiten (2/3) aufgebaut wird, bevor jegliche Kommunikation zwischen dem Paar von Einheiten (2/3) zugelassen wird.

2. Digitale Plattform (1) nach Anspruch 1, **dadurch gekennzeichnet, dass** die Bewertung auf einem Abgleich von besten Fertigkeiten basiert.

3. Digitale Plattform (1) nach einem der Ansprüche 1 bis 2, **dadurch gekennzeichnet, dass** die Bewertung weiter auf einer Struktur, die für das Wachstum der Plattform am besten ist, basiert, die höhere Bewertungen für Einsatzeinheiten (31, 32, ..., 3i) bereitstellt, die selten oder noch nie eine Aufgabe (111i) unter Verwendung der Plattform (1) durchgeführt haben.

4. Digitale Plattform (1) nach einem der Ansprüche 1 bis 3, **dadurch gekennzeichnet, dass** die maschinenbasierte Abgleichstruktur (112) eine oder mehrere maschinenbasierte Lernstrukturen (ML) umfasst.

5. Digitale Plattform (1) nach Anspruch 4, **dadurch gekennzeichnet, dass** die maschinenbasierte Lernstruktur (ML) Bergsteiger-, genetische oder evolutionäre maschinenbasierte Lernstrukturen umfasst.

6. Digitale Plattform (1) nach einem der Ansprüche 1 bis 5, **dadurch gekennzeichnet, dass** die digitale Netzwerkplattform (1) einen Dispatcher (19) zum Benachrichtigen der ausgewählten einen oder mehreren Einsatzeinheiten (31, 32, ..., 3i) und/oder einen Dienstanbieter umfasst, der passenden Einsatzeinheiten (31, 32, ..., 3i) zugeordnet ist.

7. Digitale Plattform (1) nach Anspruch 6, **dadurch gekennzeichnet, dass** der Dispatcher (19) einen Auktionsprozess umfasst, der geeigneten Einsatzeinheiten (31, 32, ..., 3i) Zugriff auf eine spezifische Aufgabe (111i) bereitstellt.

8. Digitale Plattform (1) nach einem der Ansprüche 1 bis 7, **dadurch gekennzeichnet, dass** jede zugewiesene Beziehung (10i1) eine hierarchische Struktur definiert, die mindestens zwei Teilgruppen (2/3) umfasst, mit einer ersten Teilgruppe (2), die eine Vielzahl von Betriebseinheiten (21, 22, ..., 2i) umfasst, die durch Einheitskonten (1621) definiert sind, und einer zweiten Teilgruppe (3), die eine Vielzahl von Einsatzeinheiten (31, 32, ..., 3i) umfasst, die durch Einheitskonten (1631) definiert sind.

9. Digitale Plattform (1) nach Anspruch 8, **dadurch gekennzeichnet, dass** der gesicherte cloudbasierte Netzwerkzugriff (5/51, 52, ..., 5i), der über die Datenübertragungsnetzwerkschnittstelle (18) bereitgestellt wird, für ein spezifisches Projekt (101, 102, ..., 10i) für die erste Teilgruppe (2) der Betriebseinheiten (21, 22, ..., 2i) und die zweite Teilgruppe (3) der Einsatzeinheiten (31, 32, ..., 3i) unterschiedlich ist.

10. Digitale Plattform (1) nach Anspruch 9, **dadurch gekennzeichnet, dass** Einreichungsdaten (10i2) von einer Betriebseinheit (2) über eine Zugriffsschnittstelle der Betriebseinheit (12) an die digitale Netzwerkplattform (1) übertragen werden, wobei ein entsprechendes Projekt (101, 102, ..., 10i) mittels des Projektanalysators (142) erzeugt wird und dem Persistenzspeicher (10) zugeteilt wird.

11. Digitale Plattform (1) nach Anspruch 10, **dadurch gekennzeichnet, dass** die eine oder mehreren Aufgaben (1111, 1112, ..., 111i) der Aufgabendatenbank (111), um von einer Einsatzeinheit (31, 32, ..., 3i) durchgeführt zu werden, basierend auf den Projektdaten (10ii) ausgewählt werden, die einem Projekt (101, 102, ..., 10i) durch den Aufgabenselektor (11) zugeordnet sind.

12. Digitale Plattform (1) nach Anspruch 11, **dadurch gekennzeichnet, dass** mindestens eine Einsatzeinheit (31, 32, ..., 3i) aus einer Einsatzeinheitsprofil-Datenbank (163) basierend auf den Einsatzeinheitsprofilen (1631, 1632, ...,163i) ausgewählt wird, um die ausgewählte eine oder mehreren Aufgaben (1111, 1112, ...,111i) durchzuführen, wobei Einsatzeinheitsprofile (1631, 1632, ..., 163i) mit der ausgewählten einen oder mehreren Aufgaben (1111, 1112, ...,111i) abgeglichen werden und zugehörige Beziehungsdaten (10i1) erzeugt werden, die die Beziehung (10i1) zwischen dem neuen Projekt (101, 102, ..., 10i) und der einen oder den mehreren Aufgaben (1111, 1112, ..., 111i), die durchzuführen sind, definieren.

13. Digitale Plattform (1) nach Anspruch 12, **dadurch gekennzeichnet, dass** zum Auswählen der mindestens einen Einsatzeinheit (31, 32, ..., 3i) aus der Einsatzeinheitsprofil-Datenbank (163) basierend auf den Einsatzeinheitsprofilen (1631, 1632, ..., 163i) jedes Einsatzeinheitsprofil (1631, 1632, ..., 163i) mindestens eine zertifizierte Aufgabenakkreditierung (1632) für eine der auswählbaren Aufgaben (1111, 1112, ..., 111i) der Aufgabendatenbank (111) umfasst.

14. Digitale Plattform (1) nach einem der Ansprüche 1 bis 13, **dadurch gekennzeichnet, dass** die Netzwerkschnittstelle (18) eine Webschnittstelle eines Webservers (17) der digitalen Plattform (1) ist und die netzwerkfähigen Vorrichtungen (2i2/3i2) webfähige Vorrichtungen sind, wobei die digitale Netzwerkplattform (1) auswählbare Produktivitätswerkzeuge zur Schnittstelle mit dem Projekt (101, 102, ..., 10i) umfasst, wobei auf die Produktivitätswerkzeuge über eine Webschnittstelle zugegriffen werden kann und sie mindestens ein Aufgabenmanagermodul (143) und/oder ein Kollaborationsmodul (144) und/oder ein Dokumentmanagementmodul (145) umfassen.

15. Digitale Plattform (1) nach einem der Ansprüche 1 bis 14, **dadurch gekennzeichnet, dass** die Plattform (1) weiter ein Preisangebotmodul (146) und/oder eine Preisangebotserver-Schnittstelle (1461) zum periodischen Interagieren mit einem Preisangebotserver (1462), Abrufen von Finanzinformationen mittels des Preisangebotmoduls (146) und zum Speichern der abgerufenen Finanzinformationen in dem einem Projekt (101, 102, ..., 10i) zugewiesenen Persistenzspeicher (10) umfasst.

16. Digitale Plattform (1) nach Anspruch 15, **dadurch gekennzeichnet, dass** die digitale Netzwerkplattform (1) ein Fakturierungsmodul (164) eines Kontomoduls (16) zur Anzeige und Rechnungslegung von Finanzinformationen umfasst, wobei die Finanzinformationen finanzielle Kontoinformationen in Bezug auf die Einheit (2/3) oder Einheitskonten (1621/1631) und eine Kostenbasis umfassen; und Bewertungsdaten in Bezug auf die finanziellen Kontoinformationen, wobei die Bewertungsdaten aus den finanziellen Kontoinformationen unter Verwendung von abgerufenen Aufgabeneigenschaftsdaten erzeugt werden, die einem spezifischen Projekt (101, 102, ..., 10i) zugeordnet sind.

17. Digitale Plattform (1) nach einem der Ansprüche 1 bis 16, **dadurch gekennzeichnet, dass** der Persistenzspeicher (10) in einer verteilten Netzwerkkollaborationsumgebung verwendet wird, die mehr als die Projektdaten (10ii) hält, die die Beziehungen (10i1) und die Projekteinreichungsdaten (10i2) zum Bereitstellen einer sicheren kollaborativen Umgebung innerhalb eines Projektunternehmens über das weltweite Backbone-Netzwerk (41) umfassen.

18. Digitale Plattform (1) nach einem der Ansprüche 1 bis 17, **dadurch gekennzeichnet, dass** die Authentifizierungs- und Autorisierungsdaten mindestens einen Benutzernamen und ein Passwort in der gesicherten Kommunikationsdatenbank (161) umfassen.

19. Digitale Plattform (1) nach einem der Ansprüche 1 bis 18, **dadurch gekennzeichnet, dass** die digitale Netzwerkplattform (1) einen Zertifizierungsregistrerführer (15) mit einem Aufgabenzertifizierungsdatenbehälter (151) und einem Zertifizierungsevaluierungsmodul (152) umfasst, wobei der Aufgabenzertifizierungsdatenbehälter (151) für jede Aufgabe (1111, 1112, ..., 111i) der Aufgabendatenbank (111) bewertbare Aufgabenzertifizierungen (1511, 1512, ..., 151i) hält und das Zertifizierungsevaluierungsmodul (152) für jede Aufgabe (1111, 1112, ..., 111i) der Aufgabendatenbank (111) einen zugewiesenen Zertifizierungsevaluierungsprozess zur Genehmigung einer Aufgabenzertifizierung (1511, 1512, ..., 151i) für eine Einsatzeinheit (31, 32, ..., 3i) umfasst, wobei bei Genehmigung einer Aufgabenzertifizierung (1511, 1512, ..., 151i) eine entsprechende zertifizierte Aufgabenakkreditierung (1632) für die spezifische Aufgabe der Einsatzeinheit (31, 32, ..., 3i) zugewiesen wird.

20. Digitale Plattform (1) nach einem der Ansprüche 1 bis 19, **dadurch gekennzeichnet, dass** mittels des mindestens einen Sensors, der einer physischen Zwillingsnachbildung des Projekts (101, 102, ..., 10i) zugeordnet ist, strukturelle, betriebsmäßige und/oder Umgebungsstatusparameter (10ii) des realen Projekts (101, 102, ..., 10i) gemessen, überwacht und an die digitale Plattform (1) übertragen werden, wobei der mindestens eine Sensor einen oder mehrere zugeordnete exterozeptive Sensoren oder Messvorrichtungen zum Erfassen exogener Umgebungsparameter, die das reale Projekt (101, 102, ..., 10i) physisch beeinflussen, und/oder einen oder mehrere propriozeptive Sensoren oder Messvorrichtungen zum Erfassen endogener Betriebs- oder Statusparameter des realen Projekts (101, 102, ..., 10i) umfasst, wobei die Sensoren oder Messvorrichtungen Schnittstellen zum Einstellen einer oder mehrerer drahtloser oder drahtgebundener Verbindungen zwischen der digitalen Plattform und den Sensoren oder Messvorrichtungen umfassen, wobei Datenverbindungen mittels der drahtlosen oder drahtgebundenen Verbindungen zwischen der digitalen Plattform (1) und den Sensoren oder Messvorrichtungen, die dem realen Vermögen zugeordnet sind, einstellbar sind und die von den Sensoren oder Messvorrichtungen gemessenen und/oder erfassten Projektstatusparameter (10ii) an die digitale Plattform (1) übermitteln, wobei die Statusparameter (10ii) der Darstellung des digitalen Zwillings zugewiesen sind, wobei die Werte der Statusparameter (10ii), die der Darstellung des digitalen Zwillings zugeordnet sind, basierend auf den übertragenen Parametern (10ii) dynamisch überwacht und angepasst werden, und wobei die Darstellung des digitalen Zwillings Datenstrukturen umfasst, die Zustände jedes einer Vielzahl von Teilsystemen des realen Projekts (101, 102, ..., 10i) darstellen, die die Parameterwerte (10ii) als eine Zeitreihe einer Zeitspanne halten,
dadurch, dass mittels der digitalen Plattform (1) Datenstrukturen für die Darstellung des digitalen Zwillings, die zukünftige Zustände jedes der Vielzahl von Teilsystemen des realen Projekts (101, 102, ..., 10i) darstellt, als Wertzeitreihe über eine zukünftige Zeitspanne basierend auf einer Anwendung von Simulationen unter Verwendung von kumulativer Schadensmodellierungsverarbeitung erzeugt werden, wobei die kumulative Schadensmodellierung den Effekt der Betriebs- und/oder Umgebungsvermögensparameter auf das reale Zwillingsprojekt (101, 102, ..., 10i) der zukünftigen Zeitspanne erzeugt, und
dadurch, dass mittels der digitalen Plattform (1) die Darstellung des digitalen Zwillings analysiert wird, indem ein Maß für einen zukünftigen Zustand oder Betrieb des realen Zwillingsprojekts (101, 102, ..., 10i) basierend auf der erzeugten Wertzeitreihe von Werten über die zukünftige Zeitspanne bereitgestellt wird, wobei sich das Maß auf die Wahrscheinlichkeit des Eintretens eines vordefinierten physischen Ereignisses mit einer bestimmten Stärke oder physischen Eigenschaft, das das reale Projekt (101, 102, ..., 10i) physisch beeinflusst, oder auf das Wahrscheinlichkeitsmaß des Eintretens eines vordefinierten Zustands des realen Projekts (101, 102, ..., 10i) bezieht, wobei das physisch messbare Wahrscheinlichkeitsmaß für das Eintreten oder die Entwicklung des vordefinierten physischen Ereignisses basierend auf Häufigkeit und Schwere von historischen Messdaten des vordefinierten physischen Ereignisses mittels eines Maschinenlernen-Vorhersagemoduls unter Verwendung der gemessenen historischen Zeitreihendaten erstellt wird.

21. Digitale Plattform (1) nach Anspruch 20, **dadurch gekennzeichnet, dass** für Avatar-Messungen von sich entwickelnden realen Messparametern (10ii) die Steuerung eines Betriebs oder eines Status der Entwicklung des realen Projekts (101, 102, ..., 10i) optimiert oder angepasst ist, um mit vordefinierten Betriebs- und/oder Statusvermögensparametern des spezifischen realen Projekts (101, 102, ..., 10i) basierend auf dem bereitgestellten Maß für einen zukünftigen Zustand oder Betrieb des realen Zwillingsprojekts (101, 102, ..., 10i) und/oder basierend auf der erzeugten Wertzeitreihe von Werten über die zukünftige Zeitspanne zu konvergieren, wobei im Fall einer optimierten Betriebssteuerung die optimierte Betriebssteuerung erzeugt wird, um die spezifische Betriebsleistungskriterien einer Betriebseinheit (2) in der Zeit und Zukunft des realen Projekts (101, 102, ..., 10i) gemeinsam und einzeln zu erhöhen oder ein Maß für eine Eintrittswahrscheinlichkeit, die dem Betrieb oder dem Status des realen Projekts (101, 102, ..., 10i) zugeordnet ist, innerhalb eines spezifischen Wahrscheinlichkeitsbereichs zu verringern.

22. Digitale Plattform (1) nach einem der Ansprüche 20 oder 21, **dadurch gekennzeichnet, dass** die Abnahme des Maßes für eine Eintrittswahrscheinlichkeit einer anormalen Entwicklung, die der aufgezeichneten Zeitreihe des realen Projekts (101, 102, ..., 10i) zugeordnet ist, auf einer optimierten oder angepassten Interaktion mindestens einer Betriebseinheit (2) mit dem von der digitalen Plattform (1) gesteuerten Projekt (101, 102, ..., 10i) basiert.

23. Digitale Plattform (1) nach einem der Ansprüche 1 bis 22, **dadurch gekennzeichnet, dass** die digitale Plattform (1) weiter cyber-physische Zwillingsstrukturen umfasst, die eine sich entwickelnde digitale Darstellung eines realen Projekts (101, 102, ..., 10i) zum Überwachen und/oder Vorhersagen von Projektentwicklungszeitreihen und Quantifizieren von Messungen von Anomalievorkommen durch Auslösen für Anomalieereignissen innerhalb der Zeitreihen bereitstellen.

## Revendications

1. Plateforme numérique (1) permettant une interaction réseau contrôlée, pilotée par projet, entre des unités opérationnelles (2) et des unités de déploiement (3), les unités (2/3) accédant à la plateforme numérique (1) par l'intermédiaire de dispositifs compatibles réseau (2i2/3i2) via un réseau de transmission de données (4), chaque unité (2/3) présentant un compte d'unité (1621/1631) attribué dans une base de données de communication (161) de la plateforme numérique (1) avec des identifiants d'authentification et d'autorisation associés pour un accès réseau contrôlé (5i1) à des réseaux sécurisés basés sur le cloud (5/51, 52, ..., 5i) fournis par la plateforme numérique (1), dans laquelle les projets (101, 102, ..., 10i), conservés dans un stockage persistant (10) de la plateforme numérique (1), comprennent au moins une relation attribuée (10i1) entre une unité opérationnelle (2i), une ou plusieurs unités de déploiement (3i) et une tâche de projet (101, 102, ..., 10i), et dans laquelle la plateforme numérique (1) comprend une interface réseau (18) de la plateforme numérique (1) fournissant un accès réseau aux réseaux sécurisés basés sur le cloud (5/51, 52, ..., 5i) pour les unités opérationnelles (21, 22, ..., 2i) et les unités de déploiement (31, 32, ..., 3i) via le réseau de transmission de données (4) au moyen des dispositifs compatibles réseau (2i2/3i2), **caractérisée par**
un projet (101, 102, ..., 10i), conservé dans le stockage persistant (10) de la plateforme numérique (1), est accessible uniquement aux unités attribuées (2/3) via un réseau dédié et sécurisé (51, 52, ..., 5i) permettant l'accès au téléversement et au téléchargement de données de projet (10ii) liées à un projet (101, 102, ..., 10i) et le partage des données de projet (10ii) avec d'autres unités (2/3) selon la relation attribuée (10i1),
un module de gestion de projet (14) extrayant des données de projet (10ii) à partir d'une soumission de projet (10i2) d'une unité opérationnelle (2) demandant un nouveau projet (101, 102, ..., 10i), dans lequel un nouveau projet (101, 102, ..., 10i) est généré sur la base des données de soumission de projet (10i2) par un analyseur de projet (142) du module de gestion de projet (14) et dans lequel les données de projet associées (10ii) sont stockées dans le stockage persistant (10),
un sélecteur de tâches (11) sélectionnant une ou plusieurs tâches (111i) à exécuter par une unité de déploiement (3) à partir d'une base de données de tâches (111) sur la base des données de soumission de projet (10i2), et un module de gestion de tâches (143) sélectionnant une ou plusieurs unités de déploiement (3) sur la base des données d'accréditation de compétences certifiées (1632) des unités de déploiement (3) indiquant les compétences certifiées (3i1) pouvant être exécutées par une unité de déploiement spécifique (3), dans laquelle la tâche sélectionnée (111i) est attribuée à la au moins une unité de déploiement sélectionnée (3) établissant une relation (10i1) associée au nouveau projet (101, 102, ..., 10i),
le sélecteur de tâches (11) comprenant une structure de correspondance et un comparateur basés sur une machine (112), dans laquelle les certifications de compétences appropriées (1511, 1512, ..., 151i) sont déterminées pour effectuer une tâche spécifique (111i) associée à un projet (10i) au moyen de la structure de correspondance et du comparateur basés sur une machine (112), et dans laquelle au moins une unité de déploiement (31, 32, ..., 3i) est déterminée sur la base des certifications de compétences déterminées (1511, 1512, ..., 151i) nécessaires et de critères de déclenchement supplémentaires comprenant au moins l'emplacement de l'unité opérationnelle (21, 22, ..., 2i) des données de soumission (1211, ..., 121i) et l'emplacement de l'unité de déploiement disponible (31, 32, ..., 3i), dans laquelle, pour sélectionner l'unité de déploiement (31, 32, ..., 3i), les certifications de compétences déterminées (1511, 1512, ..., 151i) comprennent des compétences obligatoires et facultatives (1511, 1512, ..., 151i) déterminées par la structure de correspondance et le comparateur basés sur une machine (112) pour effectuer une tâche sélectionnée (111i), dans laquelle les compétences obligatoires (1511, 1512, ..., 151i) sont requises pour accomplir la tâche sélectionnée (111i), et dans laquelle les compétences optionnelles (1511, 1512, ..., 151i) comprennent au moins un paramètre de langue parlée et/ou un paramètre de compétence supplémentaire indiquant des services ou équipements supplémentaires, et pour sélectionner l'unité de déploiement (31, 32, ..., 3i), les unités de déploiement (31, 32, ..., 3i) sont filtrées pour les compétences obligatoires (1511, 1512, ..., 151i) par la structure de correspondance et le comparateur basés sur une machine (112), tandis qu'une structure de notation est appliquée aux compétences optionnelles (1511, 1512, ..., 151i) par la structure de correspondance et le comparateur basés sur une machine (112), dans laquelle la notation est basée sur la correspondance de marge la plus élevée prenant en compte les valeurs des paramètres de tarification d'une unité de déploiement (31, 32, ..., 3i) et/ou les valeurs des paramètres de dépenses et/ou les valeurs des paramètres de temps de trajet ou de distance géographique, et dans laquelle plus le score est élevé, plus il est probable que l'unité de déploiement (31, 32, ..., 3i) soit sélectionnée et déclenchée par la structure de correspondance et le comparateur basés sur une machine (112),
en ce que, pour une génération d'états futurs d'un projet (101, 102, ..., 10i) basée sur les paramètres de projet capturés ou mesurés, le comparateur (112) comprend des répliques numériques de chaque projet (101, 102, ..., 10i), la réplique numérique d'un projet (101, 102, ..., 10i) étant analysée fournissant une mesure d'un état futur ou d'un fonctionnement d'un projet du monde réel jumelé (101, 102, ..., 10i) basée sur une série temporelle de valeurs générées sur la période future dudit état futur, la mesure étant liée à la probabilité de l'occurrence d'un événement prédéfini pour le projet (101, 102, ..., 10i) d'un modèle de développement possible, dans laquelle une détection d'anomalie et d'événements significatifs est déclenchée par le dépassement de l'écart mesuré par rapport à une valeur seuil définie pour un seul ou un ensemble de paramètres de projet opérationnels et/ou environnementaux et dans laquelle le projet est surveillé et son développement prédit sur la base des séries temporelles et de la quantification des mesures d'occurrences d'anomalies en déclenchant des événements d'anomalie dans les séries temporelles, et
un contrôleur d'accès (141) générant un réseau sécurisé basé sur le cloud (5/51, 52, ..., 5i) pour le nouveau projet (101, 102, ..., 10i) fournissant un accès au nouveau projet (101, 102, ..., 10i) pour l'unité opérationnelle (2) et l'unité de déploiement sélectionnée (3) désignées dans la relation (10i1), dans laquelle la relation (10i1) est établie entre une paire d'unités (2/3) avant que toute communication entre la paire d'unités (2/3) ne soit autorisée.

2. Plateforme numérique (1) selon la revendication 1, **caractérisée en ce que** la notation est basée sur la meilleure correspondance des compétences.

3. Plateforme numérique (1) selon l'une des revendications 1 à 2, **caractérisée en ce que** la notation est en outre basée sur une structure optimisée pour la croissance de la plateforme fournissant des scores plus élevés aux unités de déploiement (31, 32, ..., 3i) qui ont rarement ou jamais effectué une tâche (111i) en utilisant la plateforme (1).

4. Plateforme numérique (1) selon l'une des revendications 1 à 3, **caractérisée en ce que** la structure de mise en correspondance basée sur une machine (112) comprend une ou plusieurs structures d'apprentissage automatique (ML).

5. Plateforme numérique (1) selon la revendication 4, **caractérisée en ce que** la structure d'apprentissage automatique (ML) comprend des structures d'apprentissage automatique de type hill climbing, génétique ou évolutive.

6. Plateforme numérique (1) selon l'une des revendications 1 à 5, **caractérisée en ce que** la plateforme de réseau numérique (1) comprend un répartiteur (19) pour notifier les une ou plusieurs unités de déploiement sélectionnées (31, 32, ..., 3i) et/ou un fournisseur de services associé aux unités de déploiement appropriées (31, 32, ..., 3i).

7. Plateforme numérique (1) selon la revendication 6, **caractérisée en ce que** le répartiteur (19) comprend un processus d'enchères donnant accès à une tâche spécifique (111i) à des unités de déploiement appropriées (31, 32, ..., 3i).

8. Plateforme numérique (1) selon l'une des revendications 1 à 7, **caractérisée en ce que** chaque relation attribuée (10i1) définit une structure hiérarchique comprenant au moins deux sous-groupes (2/3), avec un premier sous-groupe (2) comprenant une pluralité d'unités opérationnelles (21, 22, ..., 2i) définies par des comptes d'unité (1621) et un second sous-groupe (3) comprenant une pluralité d'unités de déploiement (31, 32, ..., 3i) définies par des comptes d'unité (1631).

9. Plateforme numérique (1) selon la revendication 8, **caractérisée en ce que** l'accès réseau sécurisé basé sur le cloud (5/51, 52, ..., 5i) fourni via l'interface réseau de transmission de données (18) pour un projet spécifique (101, 102, ..., 10i) est différent pour le premier sous-groupe (2) des unités opérationnelles (21, 22, ..., 2i) et le second sous-groupe (3) des unités de déploiement (31, 32, ..., 3i).

10. Plateforme numérique (1) selon la revendication 9, **caractérisée en ce que** les données de soumission (10i2) sont transmises par une unité opérationnelle (2) à la plateforme de réseau numérique (1) via une interface d'accès d'unité opérationnelle (12), dans laquelle un projet correspondant (101, 102, ..., 10i) est généré au moyen de l'analyseur de projet (142) et attribué au stockage persistant (10).

11. Plateforme numérique (1) selon la revendication 10, **caractérisée en ce que** les une ou plusieurs tâches (1111, 1112, ..., 111i) de la base de données de tâches (111) sont sélectionnées pour être exécutées par une unité de déploiement (31, 32, ..., 3i) sur la base des données de projet (10ii) associées à un projet (101, 102, ..., 10i) par le sélecteur de tâches (11).

12. Plateforme numérique (1) selon la revendication 11, **caractérisée en ce qu'**au moins une unité de déploiement (31, 32, ..., 3i) est sélectionnée dans une base de données de profils d'unités de déploiement (163) sur la base des profils d'unités de déploiement (1631, 1632, ..., 163i) pour effectuer les une ou plusieurs tâches sélectionnées (1111, 1112, ..., 111i), dans laquelle les profils d'unités de déploiement (1631, 1632, ..., 163i) sont mis en correspondance avec les une ou plusieurs tâches sélectionnées (1111, 1112, ..., 111i) et des données de relation associées (10i1) sont générées définissant ladite relation (10i1) entre le nouveau projet (101, 102, ..., 10i) et les une ou plusieurs tâches (1111, 1112, ..., 111i) à effectuer.

13. Plateforme numérique (1) selon la revendication 12, **caractérisée en ce que** pour la sélection de la au moins une unité de déploiement (31, 32, ..., 3i) à partir de la base de données de profils d'unités de déploiement (163) sur la base des profils d'unités de déploiement (1631, 1632, ..., 163i), chaque profil d'unité de déploiement (1631, 1632, ..., 163i) comprend au moins une accréditation de tâche certifiée (1632) pour l'une des tâches sélectionnables (1111, 1112, ..., 111i) de la base de données de tâches (111).

14. Plateforme numérique (1) selon l'une des revendications 1 à 13, **caractérisée en ce que** l'interface réseau (18) est une interface web d'un serveur web (17) de la plateforme numérique (1) et les dispositifs compatibles réseau (2i2/3i2) sont des dispositifs compatibles web, dans laquelle la plateforme de réseau numérique (1) comprend des outils de productivité sélectionnables pour s'interfacer avec le projet (101, 102, ..., 10i), les outils de productivité étant accessibles depuis une interface web et comprenant au moins un module de gestion de tâches (143) et/ou un module de collaboration (144) et/ou un module de gestion de documents (145).

15. Plateforme numérique (1) selon l'une des revendications 1 à 14, **caractérisée en ce que** la plateforme (1) comprend en outre un module de cotation (146) et/ou une interface serveur de cotation (1461) pour s'interfacer périodiquement avec un serveur de cotation (1462), récupérer des informations financières au moyen du module de cotation (146), et pour stocker les informations financières récupérées dans le stockage persistant (10) attribué à un projet (101, 102, ..., 10i).

16. Plateforme numérique (1) selon la revendication 15, **caractérisée en ce que** la plateforme de réseau numérique (1) comprend un module de facturation (164) d'un module de compte (16) pour l'affichage et la comptabilisation d'informations financières, les informations financières comprenant des informations de compte financier relatives à l'unité (2/3) ou aux comptes d'unité (1621/1631), et une base de coût ; et des données d'évaluation relatives aux informations de compte financier, les données d'évaluation étant générées à partir des informations de compte financier à l'aide de données de caractéristiques de tâche récupérées associées à un projet spécifique (101, 102, ..., 10i).

17. Plateforme numérique (1) selon l'une des revendications 1 à 16, **caractérisée en ce que** le stockage persistant (10) est utilisé dans un environnement de collaboration en réseau distribué, contenant plus que les données de projet (10ii) comprenant les relations (10i1) et les données de soumission de projet (10i2), pour fournir un environnement collaboratif sécurisé au sein d'une structure de projet sur le réseau fédérateur mondial (41).

18. Plateforme numérique (1) selon l'une des revendications 1 à 17, **caractérisée en ce que** les identifiants d'authentification et d'autorisation comprennent au moins un nom d'utilisateur et un mot de passe dans la base de données de communication sécurisée (161).

19. Plateforme numérique (1) selon l'une des revendications 1 à 18, **caractérisée en ce que** la plateforme de réseau numérique (1) comprend un registraire de certification (15) doté d'un référentiel de données de certification de tâches (151) et d'un module d'évaluation de certification (152), le référentiel de données de certification de tâches (151) contenant, pour chaque tâche (1111, 1112, ..., 111i) de la base de données de tâches (111), des certifications de tâches évaluables (1511, 1512, ..., 151i) et le module d'évaluation de certification (152) comprenant, pour chaque tâche (1111, 1112, ..., 111i) de la base de données de tâches (111), un processus d'évaluation de certification attribué pour approuver une certification de tâche (1511, 1512, ..., 151i) pour une unité de déploiement (31, 32, ..., 3i), dans laquelle lors de l'approbation d'une certification de tâche (1511, 1512, ..., 151i), une accréditation de tâche certifiée correspondante (1632) est attribuée pour la tâche spécifique à ladite unité de déploiement (31, 32, ..., 3i).

20. Plateforme numérique (1) selon l'une des revendications 1 à 19, **caractérisée en ce que**, au moyen du au moins un capteur associé à une réplique physique jumelée du projet (101, 102, ..., 10i), des paramètres d'état structurel, opérationnel et/ou environnemental (10ii) du projet du monde réel (101, 102, ..., 10i) sont mesurés, surveillés et transmis à la plateforme numérique (1), dans laquelle le au moins un capteur comprend un ou plusieurs capteurs ou dispositifs de mesure extéroceptifs associés pour détecter des paramètres environnementaux exogènes impactant physiquement le projet du monde réel (101, 102, ..., 10i) et/ou un ou plusieurs capteurs ou dispositifs de mesure proprioceptifs pour détecter des paramètres de fonctionnement ou d'état endogènes du projet du monde réel (101, 102, ..., 10i), dans laquelle les capteurs ou dispositifs de mesure comprennent des interfaces pour établir une ou plusieurs connexions filaires ou sans fil entre la plateforme numérique et les capteurs ou dispositifs de mesure, les liaisons de données étant réglables au moyen des connexions sans fil ou filaires entre la plateforme numérique (1) et les capteurs ou dispositifs de mesure associés à l'actif réel transmettant les paramètres d'état de projet (10ii) mesurés et/ou capturés par les capteurs ou dispositifs de mesure à la plateforme numérique (1), dans laquelle les paramètres d'état (10ii) sont attribués à la représentation du jumeau numérique, les valeurs des paramètres d'état (10ii) associés à la représentation du jumeau numérique étant surveillées et adaptées dynamiquement sur la base des paramètres transmis (10ii), et dans laquelle la représentation du jumeau numérique comprend des structures de données représentant les états de chacun d'une pluralité de sous-systèmes du projet du monde réel (101, 102, ..., 10i) contenant les valeurs des paramètres (10ii) sous la forme d'une série temporelle d'une période temporelle,
**en ce que**, au moyen de la plateforme numérique (1), des structures de données pour la représentation du jumeau numérique représentant les états futurs de chacun de la pluralité de sous-systèmes du projet du monde réel (101, 102, ..., 10i) sont générées sous forme de séries temporelles de valeurs sur une période temporelle future sur la base d'une application de simulations utilisant un traitement de modélisation des dommages cumulatifs, la modélisation des dommages cumulatifs générant l'effet des paramètres d'actifs opérationnels et/ou environnementaux sur le projet du monde réel jumelé (101, 102, ..., 10i) de la période temporelle future, et
**en ce que**, au moyen de la plateforme numérique (1), la représentation du jumeau numérique est analysée en fournissant une mesure pour un état ou un fonctionnement futur du projet du monde réel jumelé (101, 102, ..., 10i) sur la base de la série temporelle de valeurs générée de valeurs sur ladite période temporelle future, la mesure étant liée à la probabilité de l'occurrence d'un événement physique prédéfini présentant une intensité ou une caractéristique physique spécifique impactant physiquement le projet du monde réel (101, 102, ..., 10i) ou la mesure de probabilité de l'occurrence d'un état prédéfini du projet du monde réel (101, 102, ..., 10i), dans laquelle la mesure de probabilité physiquement mesurable pour l'occurrence ou le développement de l'événement physique prédéfini est établie sur la base de la fréquence et de la gravité des données de mesure historiques de l'événement physique prédéfini au moyen d'un module d'apprentissage automatique de prédiction utilisant les données mesurées de séries temporelles historiques.

21. Plateforme numérique (1) selon la revendication 20, **caractérisée en ce que**, pour les mesures d'avatar de paramètres de mesure évolutifs du monde réel (10ii), le contrôle d'une opération ou d'un état de développement du projet du monde réel (101, 102, ..., 10i) est optimisé ou ajusté pour converger avec des paramètres d'actifs opérationnels et/ou d'état prédéfinis du projet du monde réel spécifique (101, 102, ..., 10i) sur la base de la mesure fournie pour un état ou un fonctionnement futur du projet du monde réel jumelé (101, 102, ..., 10i) et/ou sur la base de la série temporelle de valeurs générée de valeurs sur ladite période temporelle future, dans laquelle, dans le cas d'un contrôle optimisé de l'opération, le contrôle optimisé de l'opération est généré pour augmenter conjointement et solidairement les critères de performance opérationnelle spécifiques d'une unité opérationnelle (2) dans le temps et le futur du projet du monde réel (101, 102, ..., 10i) ou diminuer une mesure de probabilité d'occurrence associée à l'opération ou à l'état du projet du monde réel (101, 102, ..., 10i) dans une plage de probabilité spécifiée.

22. Plateforme numérique (1) selon l'une des revendications 20 ou 21, **caractérisée en ce que** la réduction de la mesure d'une probabilité d'occurrence d'un développement anormal associé à la série temporelle enregistrée du projet du monde réel (101, 102, ..., 10i) est basée sur une interaction optimisée ou ajustée d'au moins une unité opérationnelle (2) avec le projet (101, 102, ..., 10i) contrôlé par la plateforme numérique (1).

23. Plateforme numérique (1) selon l'une des revendications 1 à 22, **caractérisée en ce que** la plateforme numérique (1) comprend en outre des structures de jumeaux cyber-physiques fournissant une représentation numérique évolutive d'un projet du monde réel (101, 102, ..., 10i) pour surveiller et/ou prédire des séries temporelles de développement de projet et quantifier des mesures d'occurrences d'anomalies en déclenchant des événements d'anomalie dans les séries temporelles.
